(19) **Europäisches Patentamt**
**European Patent Office**
**Office européen des brevets**

(11) **EP 2 899 665 B1**

(12) **EUROPEAN PATENT SPECIFICATION**

(45) Date of publication and mention
of the grant of the patent:
**04.03.2020 Bulletin 2020/10**

(21) Application number: **13839403.6**

(22) Date of filing: **29.08.2013**

(51) Int Cl.:
***G06F 21/55*** *(2013.01)*

(86) International application number:
**PCT/JP2013/073197**

(87) International publication number:
**WO 2014/045827 (27.03.2014 Gazette 2014/13)**

(54) **INFORMATION PROCESSING DEVICE, INFORMATION PROCESSING METHOD, AND PROGRAM**

INFORMATIONSVERARBEITUNGSVORRICHTUNG,
INFORMATIONSVERARBEITUNGSVERFAHREN UND PROGRAMM

DISPOSITIF DE TRAITEMENT D'INFORMATIONS, PROCÉDÉ DE TRAITEMENT
D'INFORMATIONS ET PROGRAMME

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2012 JP 2012205836**

(43) Date of publication of application:
**29.07.2015 Bulletin 2015/31**

(73) Proprietor: **Mitsubishi Electric Corporation
Tokyo 100-8310 (JP)**

(72) Inventors:
• **SAKURAI, Shoji
Tokyo 100-8310 (JP)**

• **KAWAUCHI, Kiyoto
Tokyo 100-8310 (JP)**

(74) Representative: **Pfenning, Meinig & Partner mbB
Patent- und Rechtsanwälte
Theresienhöhe 11a
80339 München (DE)**

(56) References cited:
**EP-A1- 0 985 995    JP-A- 2003 216 577
JP-A- 2004 054 706    JP-A- 2005 136 526
JP-A- 2013 232 716    US-A1- 2004 201 612
US-A1- 2005 091 513    US-A1- 2012 102 542
US-B1- 6 681 331**

## Description

### Technical Field

The present invention relates to a technology for visualizing a threat to an information system.

### Background Art

In a conventional threat visualization method (disclosed in Patent Literature 1, for example), occurrence of a threat is determined based on a correlation rule that defines the occurrence order of events considered to be the threat, and the events matching the correlation rule are displayed on a screen to warn a user.

US 2005/091513 A1 describes an unauthorized access detection device capable of detecting unauthorized accesses which are made through preparation, in real time. When a packet travels on a network, a key data extractor obtains the packet and obtains key data. Next an ongoing scenario detector searches an ongoing scenario storage unit for an ongoing scenario with the key data as search keys. A check unit determines whether the execution of the process indicated by the packet after the ongoing scenario detected by the ongoing scenario detector follows an unauthorized access scenario being stored in an unauthorized access scenario storage unit. Then a report output unit outputs an unauthorized access report depending on the check result of the check unit.

EP 0 985 995 A1 relates to the detection of security problems in a computer network or on any computer within said network. To detect outsiders trying to break into a computer system and/or to detect insiders misusing the privileges they have received, a behavior-based approach for a pattern-oriented intrusion detection system is used.

US 2004/201612 A1 describes a method of monitoring events in a computer network.

US 6,681,331 B1 describes a real-time approach for detecting aberrant modes of system behavior induced by abnormal and unauthorized system activities that are indicative of an intrusive, undesired access of the system. This detection methodology is based on behavioral information obtained from a suitably instrumented computer program as it is executing.

US 2012/102542 A1 describes a management server which monitors even the occurrence of items, which are not targets of security policies, evaluates a change of the monitoring result, and implements specific output when necessary.

### Citation List

### Patent Literature

Patent Literature 1: JP 2004-537075

## Summary of Invention

### Technical Problem

In the conventional threat visualization method, there is a problem that the screen for warning is not displayed to the user unless the events defined in the correlation rule are all detected.

The events defined in the correlation rule are abnormal events considered to be malicious behaviors, which may occur in a network device, a server, and a computer such as a PC (Personal Computer).

Such events are detected by a sensor, for example, and the detected events are notified to an apparatus whose screen is monitored by the user. Detection omission, however, may occur in the detection of these abnormal events by the sensor.

Consequently, in the conventional threat visualization method, there is a problem that, though an attack on an information system is actually being carried out, the correlation rule is not satisfied due to detection omission of one event, so that a warning is not displayed to the user.

A main object of the present invention is to solve the problem as mentioned above. It is the main object of the present invention to visualize a progress status of an attack and display a warning to a user without using a correlation rule when the attack on an information system is possibly being carried out.

### Solution to Problem

The invention is defined only by the appended claims.

### Advantageous Effects of Invention

In the present invention, the occurred event progress degree string is derived according to the occurrence pattern of the events that have occurred in the information system, and the similarity degree between the occurred event progress degree string and the attack event progress degree string is calculated.

Further, in the present invention, the progress status of the attack on the information system is visualized, based on the occurred event progress degree string and the result of calculation of the similarity degree.

Consequently, according to the present invention, use of a correlation rule is not required, so that a situation may be avoided where a warning is not displayed to a user because the correlation rule is not satisfied due to detection omission of one event, and therefore the warning can be displayed to the user when the attack is possibly being carried out.

### Brief Description of Drawings

[Fig. 1] is a diagram illustrating a configuration example of an information system according to a first embodiment.

[Fig. 2] is a diagram illustrating a hardware configuration of a threat visualization system according to the first embodiment.

[Fig. 3] is a diagram illustrating an example of data in a hard disk of the threat visualization system according to the first embodiment.

[Fig. 4] is a diagram illustrating an example of data in a RAM of the threat visualization system according to the first embodiment.

[Fig. 5] is a diagram illustrating an example of a functional configuration of the threat visualization system according to the first embodiment.

[Fig. 6] is a table illustrating an example of an attack event table according to the first embodiment.

[Fig. 7] is a table illustrating an example of a past case table according to the first embodiment.

[Fig. 8] is a table illustrating an example of an attack scenario table according to the first embodiment.

[Fig. 9] is a table illustrating an example of an attack phase table according to the first embodiment.

[Fig. 10] is a diagram illustrating an example of a security threat distribution screen according to the first embodiment.

[Fig. 11] is a diagram illustrating an example of a security growth process display screen according to the first embodiment.

[Fig. 12] is a flowchart diagram illustrating an outline of operation of the threat visualization system according to the first embodiment.

[Fig. 13] is a flowchart diagram illustrating details of the operation of the threat visualization system according to the first embodiment.

[Fig. 14] is a flowchart diagram illustrating details of the operation of the threat visualization system according to the first embodiment.

[Fig. 15] is a flowchart diagram illustrating details of the operation of the threat visualization system according to the first embodiment.

[Fig. 16] is a flowchart diagram illustrating details of the operation of the threat visualization system according to the first embodiment.

[Fig. 17] is a flowchart diagram illustrating details of the operation of the threat visualization system according to the first embodiment.

[Fig. 18] is a flowchart diagram illustrating details of the operation of the threat visualization system according to the first embodiment.

## Description of Embodiments

Embodiment 1.

In this embodiment, a description will be directed to a configuration in which, even if detection omission of an individual abnormal event has occurred, a warning is displayed to a user when an attack is possibly being carried out.

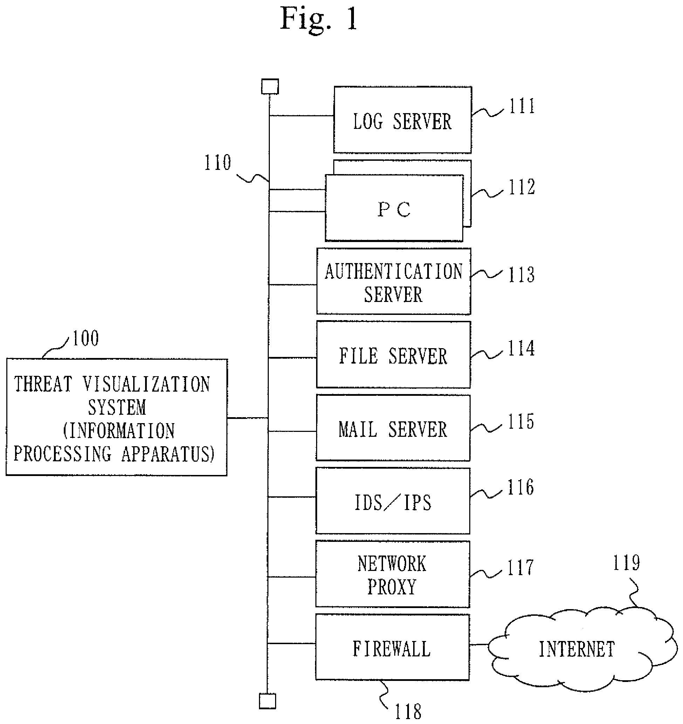

Fig. 1 shows a configuration example of an information system according to this embodiment.

The information system according to this embodiment is configured with a threat visualization system 100, a LAN (Local Area Network) 110, a log server 111, PCs 112, an authentication server 113, a file server 114, a mail server 115, an IDS (Intrusion Detection System)/IPS (Intrusion Prevention System) 116, a network proxy 117, and a firewall 118, for example.

The threat visualization system 100 is a computer that visualizes a threat to the information system, and corresponds to an example of an information processing apparatus.

The threat visualization system 100 is connected to the LAN 110.

The log server 111, the PCs 112, the authentication server 113, the file server 114, the mail server 115, the IDS/IPS 116, the network proxy 117, and the firewall 118 are connected to the LAN 110.

The firewall 118 is connected to an Internet 119.

Usually, a plurality of the PCs 112 are present.

Each PC 112 corresponds to an example of a terminal device.

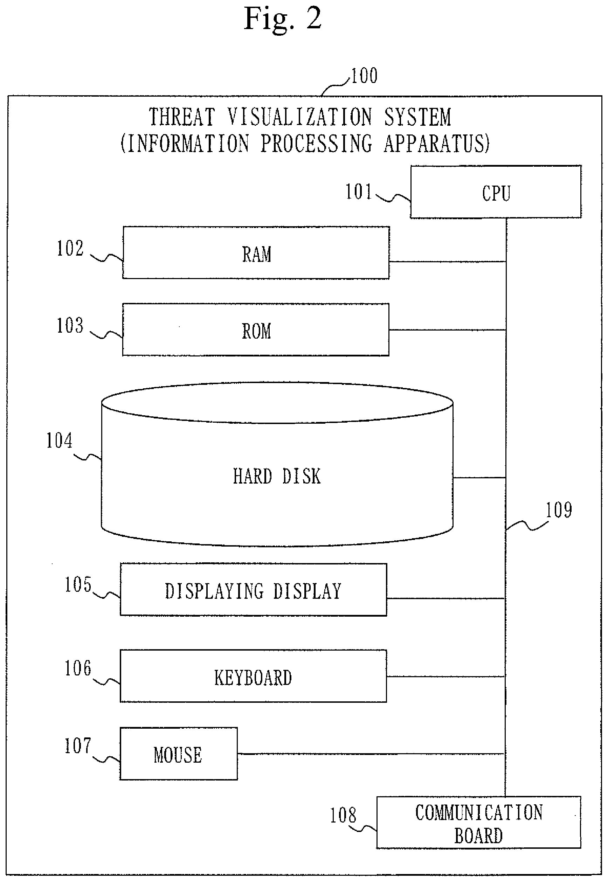

As illustrated in Fig. 2, the threat visualization system 100 includes a CPU 101, a RAM (Random Access Memory) 102, a ROM (Read Only Memory) 103, a hard disk 104, a displaying display 105, a keyboard 106, a mouse 107, and a communication board 108. These are connected to a bus 109.

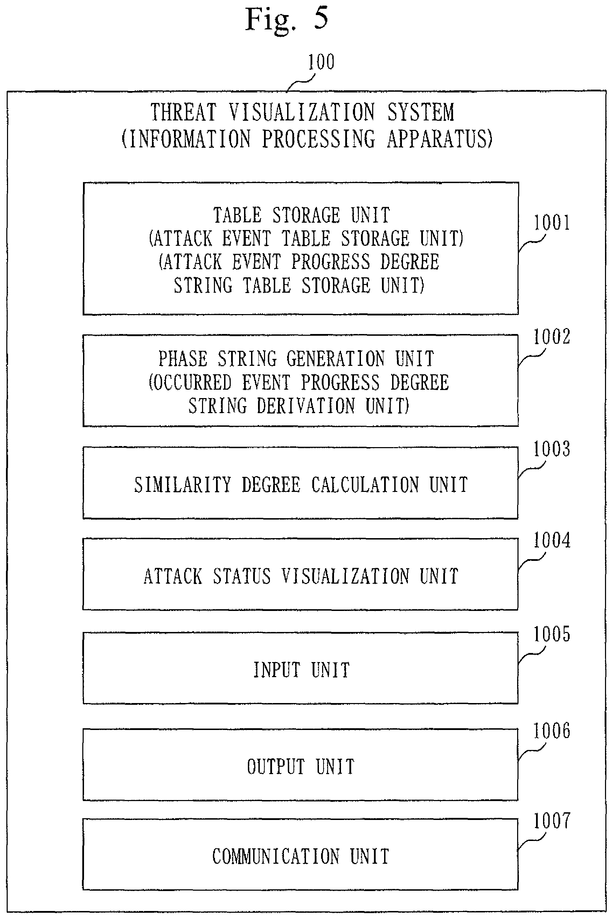

The threat visualization system 100 includes a functional configuration illustrated in Fig. 5.

Referring to Fig. 5, a table storage unit 1001 stores various tables used for visualizing a threat to the information system.

Details of the various tables will be described later.

The table storage unit 1001 corresponds to an example of an attack event table storage unit and an attack event progress degree string table storage unit.

The table storage unit 1001 is implemented by the RAM 102 and the hard disk 104 in Fig. 2.

According to the occurrence pattern of events that have occurred in the information system, a phase string generation unit 1002 concatenates phase values that indicate progress degrees of the events, thereby generating a phase string (occurred event progress degree string).

The phase string generation unit 1002 corresponds to an example of an occurred event progress degree derivation unit.

The phase string generation unit 1002 is constituted as a program, for example, and the program that implements the phase string generation unit 1002 is executed by the CPU 101 in Fig. 2.

A similarity degree calculation unit 1003 calculates a similarity degree between the phase string (occurred event progress degree string) obtained by the phase string generation unit 1002 and a phase string indicated in a past case table or an attack scenario table that will be described later.

The similarity degree calculation unit 1003 is also constituted as a program, for example, and the program that implements the similarity degree calculation unit 1003 is executed by the CPU 101 in Fig. 2.

An attack status visualization unit 1004 visualizes a progress status of an attack on the information system, based on the phase string obtained by the phase string generation unit 1002 and a result of calculation of the similarity degree by the similarity degree calculation unit 1003.

The attack status visualization unit 1004 is also constituted as a program, for example, and the program that implements the attack status visualization unit 1004 is executed by the CPU 101 in Fig. 2.

An input unit 1005 inputs various data from a user of the threat visualization system 100.

The input unit 1005 is implemented by the keyboard 106 and the mouse 107 in Fig. 2.

An output unit 1006 displays various data to the user of the threat visualization system 100.

The output unit 1006 displays the progress status of the attack visualized by the attack status visualization unit 1004 to the user, for example.

The output unit 1006 is implemented by the displaying display 105 in Fig. 2.

A communication unit 1007 communicates with other apparatuses through the LAN 110.

The communication unit 1007 receives log data from the log server 111, for example.

The communication unit 1007 is implemented by the communication board 108 in Fig. 2.

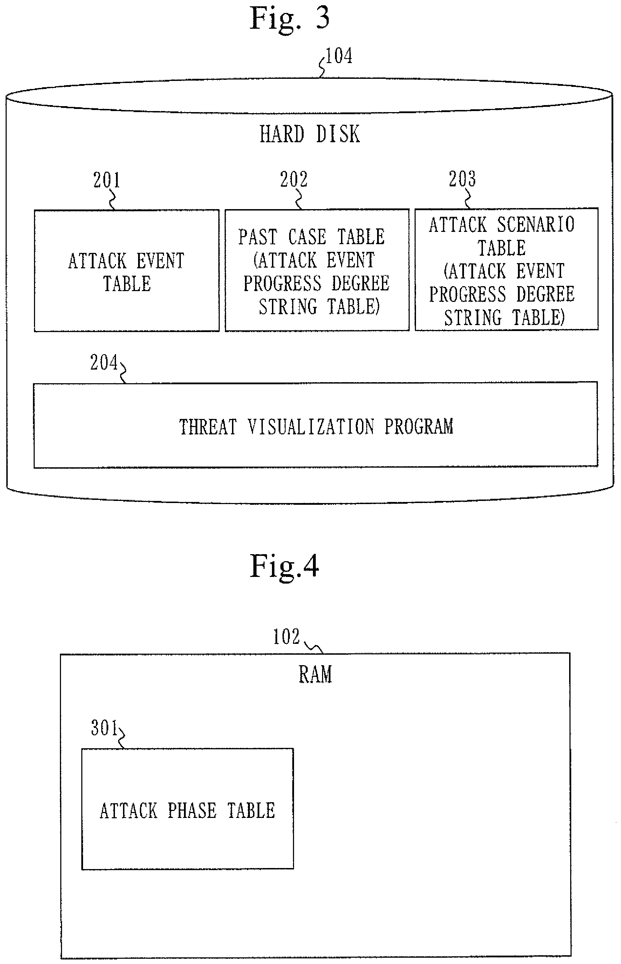

Fig. 3 illustrates tables stored in the hard disk 104 in Fig. 2.

An attack event table 201, a past case table 202, an attack scenario table 203, and a threat visualization program 204 are stored in the hard disk 104.

The threat visualization program 204 is a program that implements the phase string generation unit 1002, the similarity degree calculation unit 1003, and the attack status visualization unit 1004 in Fig. 5.

The threat visualization program 204 is loaded onto the RAM 102. The CPU 101 reads the threat visualization program 204 from the RAM 102, and then executes the threat visualization program 204, thereby implementing the functions of the phase string generation unit 1002, the similarity degree calculation unit 1003, and the attack status visualization unit 1004 in Fig. 5.

Though not illustrated in Fig. 3, the hard disk 104 stores an OS (Operating System). The CPU 101 executes the threat visualization program 204, using the OS.

Fig. 4 illustrates a table generated on the RAM 102.

An attack phase table 301 is generated on the RAM 102 by the threat visualization program 204.

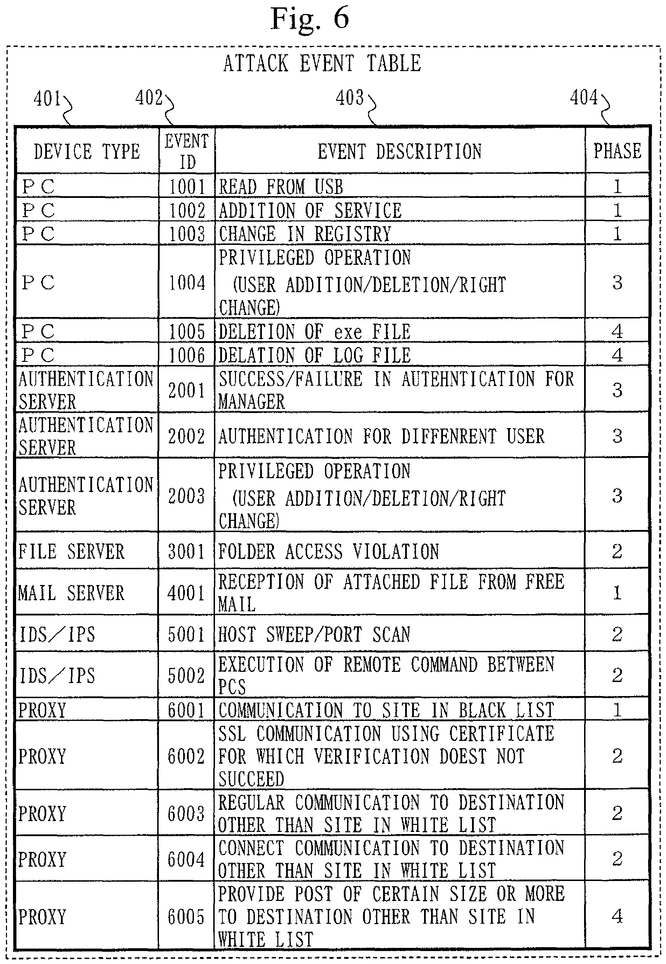

Fig. 6 illustrates a configuration of the attack event table 201.

The attack event table 201 is a table in which, when each of a plurality of events caused from an attack on the information system has occurred, a progress degree of the attack is indicated.

As illustrated in Fig. 6, the attack event table 201 includes a device type 401, an event ID 402, an event description 403, and a phase 404, for each event caused from the attack.

The device type 401 indicates a device (such as the PC112, or the authentication server 113) from which the event has occurred.

An identifier for each event is given in the field of the event ID 402.

An outline of each event is given in the field of the event description 403.

The value of a phase representing a progress degree or a stage of the attack is given in the field of the phase 404.

To take an example, the event to be observed when the attack is in the state of "intrusion" may be defined to be a phase "1", the event to be observed when the attack is in the state of "search" may be defined to be a "phase 2", the event to be observed when the attack is in the state of "privilege elevation" may be defined to be a "phase 3", and the event when the attack is in the state of "information theft" may be defined to be a "phase 4".

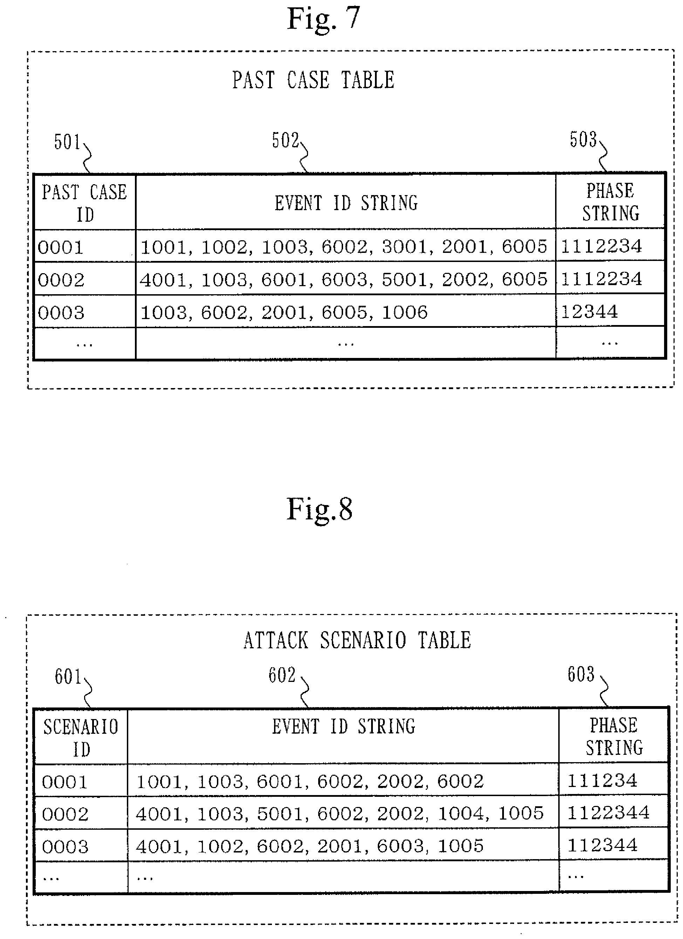

Fig. 7 illustrates a configuration of the past case table 202.

The past case table 202 is a table in which events that occurred in each past case of an attack (attack sequence) are indicated in the order of occurrence.

The past case table 202 includes a past case ID 501, an event ID string 502, and a phase string 503.

An identifier for the past case is given in the field of the past case ID 501.

Event IDs for the events that occurred in the past case of the attack are given in the field of the event ID string 502 in the order of occurrence.

A character string (phase string) is given in the field of the phase string 503. The character string (phase string) is obtained by concatenating the values in the phase 404 corresponding to the respective event IDs given in the field of the event ID string 502.

The character string given in the field of the phase string 503 corresponds to an example of an attack event progress degree string.

The past case table 202 corresponds to an example of an attack event progress degree string table,

Fig. 8 illustrates a configuration of the attack scenario table 203.

The attack scenario table 203 is a table in which events assumed to occur in each assumed attack (attack sequence) are indicated in the order of occurrence.

An attack which does not actually occur but whose occurrence is assumed, is called an attack scenario.

An attack obtained by transformation of a part of an attack that actually occurred in the past may be used as the attack scenario, for example.

The attack scenario table 203 includes a scenario ID 601, an event ID string 602, and a phase string 603.

An identifier for each attack scenario is given in the field of the scenario ID 601.

Event IDs for the events whose occurrence is assumed when the attack is carried out are given in the field of the event ID string 602 in the order of occurrence of the events.

A character string (phase string) is given in the field of the phase string 603. The character string (phase string) is obtained by concatenating the values in the phase 404 corresponding to the respective event IDs given in the field of the event ID string 602 in the order of occurrence.

The character string given in the field of the phase string 603 corresponds to an example of an attack event progress degree string.

The attack scenario table 203 corresponds to an example of an attack event progress degree string table.

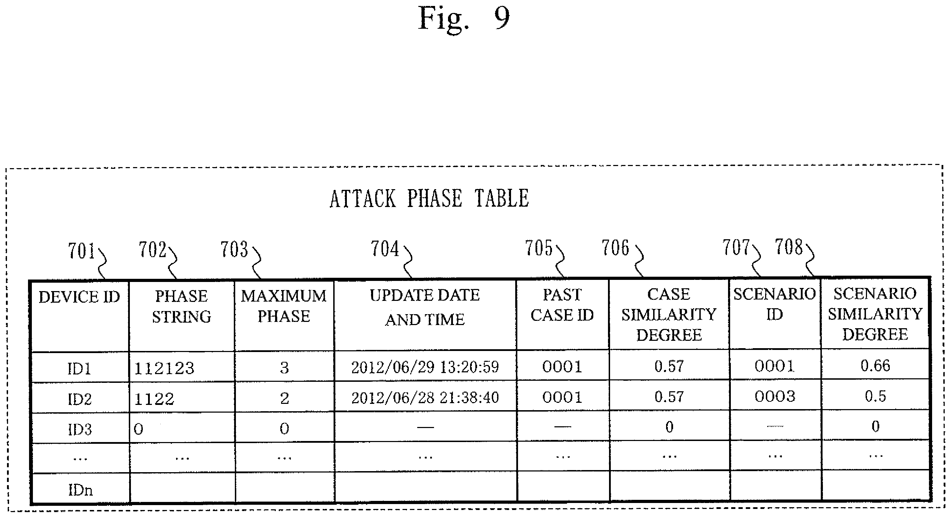

Fig. 9 illustrates a configuration of the attack phase table 301.

The attack phase table 301 is a table generated by the phase string generation unit 1002 according to the occurrence pattern of events that have occurred in the information system. The attack phase table 301 is generated after analyzing log data from the log server 111 by the phase string generation unit 1002.

The attack phase table 301 includes a device ID 701, a phase string 702, a maximum phase 703, an update date and time 704, a past case ID 705, a case similarity degree 706, a scenario ID 707, and a scenario similarity degree 708.

An IP (Internet Protocol) address of each PC 112 is usually given in the field of the device ID 701 (an address for the device ID 701 is not limited to the IP address, and a MAC (Media Access Control) address or the like may be used for the device ID 701 as long as the PC can be uniquely identified).

A character string obtained by concatenating the values in the phase 404 corresponding to the respective events extracted by the log data analysis in the order of occurrence is given in the field of the phase string 702.

A maximum one of the values in the phase string 702 is given in the field of the maximum phase 703.

A date and time described in the log data that has been last referred to by the phase string generation unit 1002 is given in the field of the update date and time 704.

The past case ID 501 of the past case, based on which a similarity degree shown in the field of the case similarity degree 706 has been calculated, is given in the field of the past case ID 705.

A maximum one of similarity degrees of the past cases calculated by the similarity degree calculation unit 103 with respect to the phase string 702 is given in the field of the case similarity degree 706.

The scenario ID 601 of the attack scenario, based on which a similarity degree indicated in the field of the scenario similarity degree 708 has been calculated, is given in the field of the scenario ID 707.

A maximum one of similarity degrees of the attack scenarios calculated by the similarity degree calculation unit 1003 with respect to the phase string 702 is given in the field of the scenario similarity degree 708.

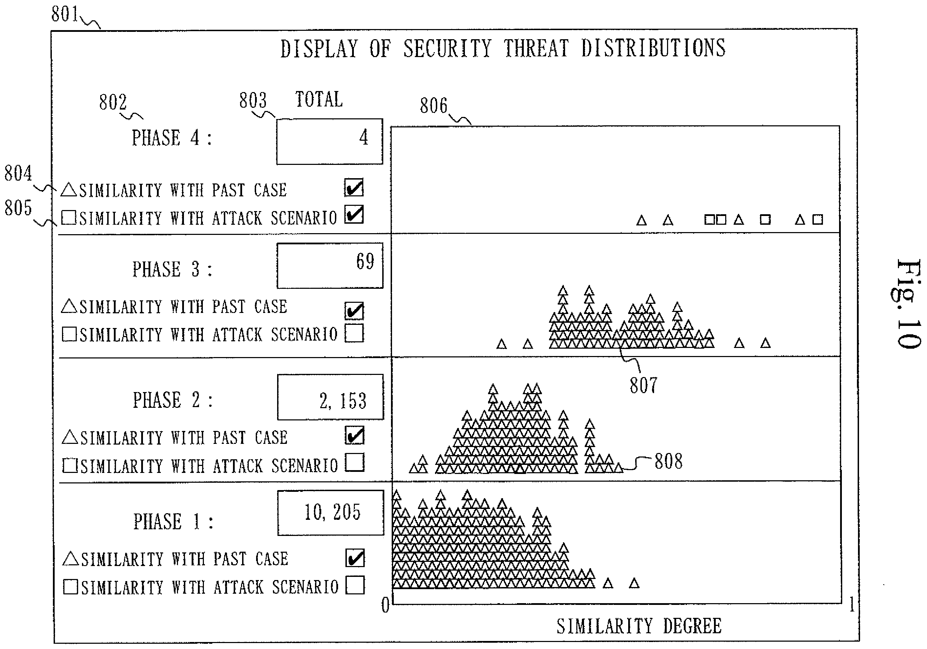

Fig. 10 illustrates a screen example of a security threat distribution screen.

A security threat distribution screen 801 includes a phase display 802, a total number display 803, a past case display selection box 804, an attack scenario display selection box 805, and a similarity degree display region 806.

The phase display 802 displays the name of each phase.

The total number display 803 displays the total number of the devices belonging to the phase.

The past case display selection box 804 is a check box for selecting display of similarity with one of the past cases.

The attack scenario display selection box 805 is a check box for selecting display of similarity with one of the attack scenarios.

The similarity degree display region 806 displays one or more of the devices belonging to each phase according to the similarity degree.

The security threat distribution screen 801 is generated by the attack status visualization unit 1004 and is displayed by the output unit 1006.

Reference symbol △ indicates a similarity degree with the past case, and reference symbol □ indicates a similarity degree with the attack scenario, in the similarity degree display region 806.

Each of the reference symbols △ and □ indicates the PC 112.

The horizontal axis of the similarity degree display region 806 indicates a similarity degree value (0.0 to 1.0 inclusive), while the vertical axis of the similarity degree display region 806 indicates the number of the PCs 112.

On the security threat distribution screen 801, for each device ID in the attack phase table (in Fig. 9), in the similarity degree display region 806 of the phase corresponding to the value of the maximum phase 703, the reference symbol △ is plotted at a position corresponding to the value of the case similarity degree 706 and the reference symbol □ is plotted at a position corresponding to the value of the scenario similarity degree 708.

In the record (device ID : ID1) at a first row in Fig. 9, for example, the maximum phase 703 is "3", and the case similarity degree 706 is "0.57". Thus, the reference symbol Δ is plotted at a position indicated by reference sign 807 in Fig. 10 (since the attack scenario display selection box 805 of the phase 3 is not checked in Fig. 10, the reference symbol □ for the scenario similarity degree 708 of "0.66" is not displayed).

Similarly, in the record (device ID : ID2) at a second row in Fig. 9, the maximum phase 703 is "2", and the case similarity degree 706 is "0.57". Thus, the reference symbol Δ is plotted at a position indicated by reference sign 808 in Fig. 10, for example (since the attack scenario display selection box 805 of the phase 2 is not checked in Fig. 10, the reference symbol □ for the scenario similarity degree 708 of "0.5" is not displayed).

By plotting a relationship between the maximum phase 703 and the maximum similarity degree (the case similarity degree 706 and/or the scenario similarity degree 708) extracted for each PC 112, and by displaying the graphs indicating distributions of the maximum phase 703 and the maximum similarity degree with respect to the plurality of the PCs 112 in this manner, the progress status of the attack on the information system may be visualized.

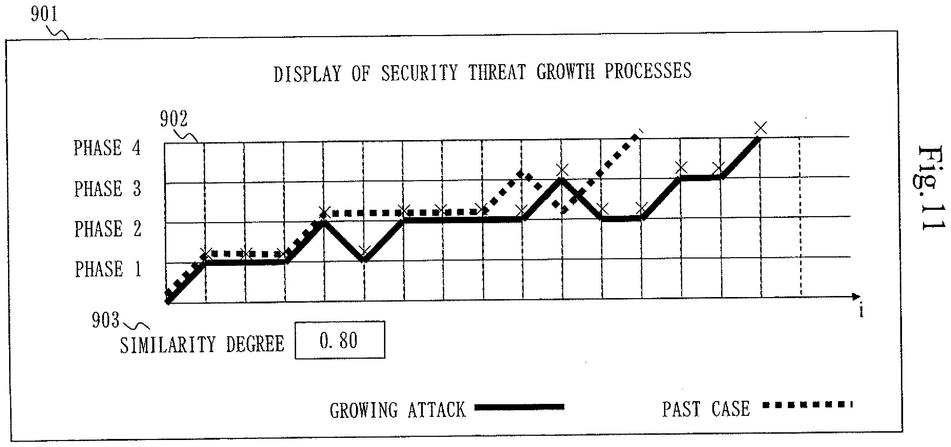

Fig. 11 illustrates a screen example of a security growth process display screen.

A security growth process display screen 901 includes a growth process display region 902 and a similarity degree display 903. The growth process display region 902 displays an occurrence process of events with respect to a specific one of the devices together with the occurrence process of the similar past case. The similarity degree display 903 displays a similarity degree between these occurrence processes.

That is, on the security growth process display screen 901, a phase value transition in the phase string 702 of a specific one of the PCs 112 and a phase value transition in the phase string 603 of the past case indicated in the past case ID 705 are graph-displayed in the growth process display region 902.

The value of the case similarity degree 706 of the PC 112 is displayed on the similarity degree display 903.

Fig. 9 illustrates an example where the occurrence process of the events with respect to the specific device is displayed together with the occurrence process of the similar past case. The occurrence process of the events with respect to the specific device may be displayed together with the occurrence process of the similar attack scenario.

The progress status of the attack on the information system is visualized on the security growth process display screen 901 by such a method.

Next, operation will be described.

A general user accesses the authentication server 113 using the PC 112 to perform authentication based on a user ID and a password, and then accesses the file server 114.

The user accesses the mail server 115 using the PC 112 to read or write a mail.

The user accesses the Internet 119 through the network proxy 117 and further through the firewall 118, using the PC 112.

The PC 112, the authentication server 113, the file server 114, the mail server 115, the network proxy 117, and the firewall 118 each output predetermined log data (hereinafter also referred to just as a log) when these operations are performed by the general user.

The IDS/IPS 116 outputs predetermined log data when communication of a packet matching a predetermined condition is observed on the LAN 110.

The log data of these devices are transmitted to the log server 111, and are recorded in the log server 111 according to the time series of times described in the log data.

In the threat visualization system 100, the threat visualization program 204 stored in the hard disk 104 is loaded from the hard disk 104 onto the RAM 102 through the bus 109, and is then executed by the CPU 101.

The threat visualization program 204 sequentially extracts the logs recorded in the log server 111 according to the time series through the LAN 110.

The logs from the log server 111 each include an event occurrence date and time, a log type, an event ID, a device ID, and an event description of an individual occurred event recorded therein.

The event occurrence date and time indicates a date and time on which the event recorded in the log has occurred.

The log type indicates the type of the device in which the event recorded in the log has occurred.

The event ID indicates an ID whereby the type of the individual occurred event may be uniquely identified.

The device ID indicates an ID whereby the device in which the event has occurred is uniquely identified.

The log that has recorded passage of a packet or the like includes two device IDs, which are the device ID of a transmission source and the device ID of a transmission destination.

The event description indicates a description of details of the individual occurred event.

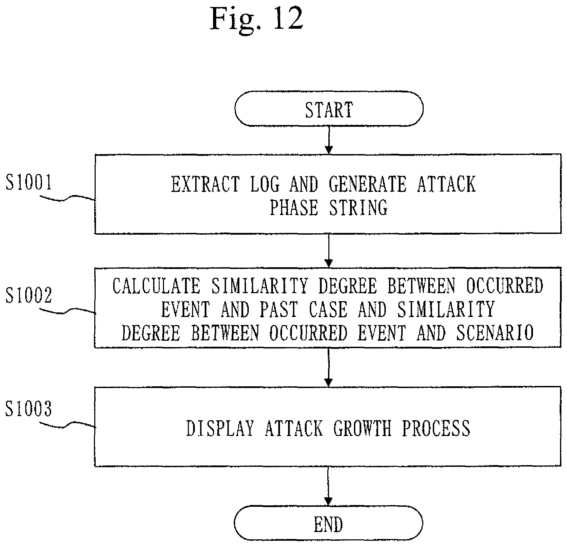

Fig. 12 illustrates a basic flow of processes to be executed by the threat visualization system 100 for each occurred event recorded in each of the extracted logs.

The processes in steps S1001 to S1003 illustrated in Fig. 12 are repetitively executed in a cycle of five minutes, for example.

The cycle of five minutes is just an exemplification, and an arbitrary cycle may be set, according to the size of the information system and a security policy.

In flowcharts in Figs. 12 to 18, the procedure of the processes is described in the form of operations of the phase string generation unit 1002, the similarity degree calculation unit 1003, and the attack status visualization unit 1004.

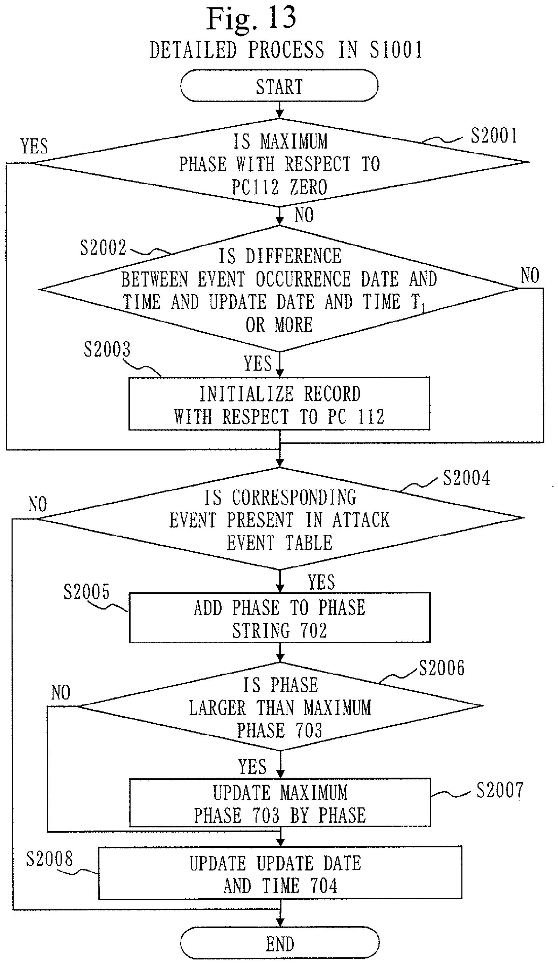

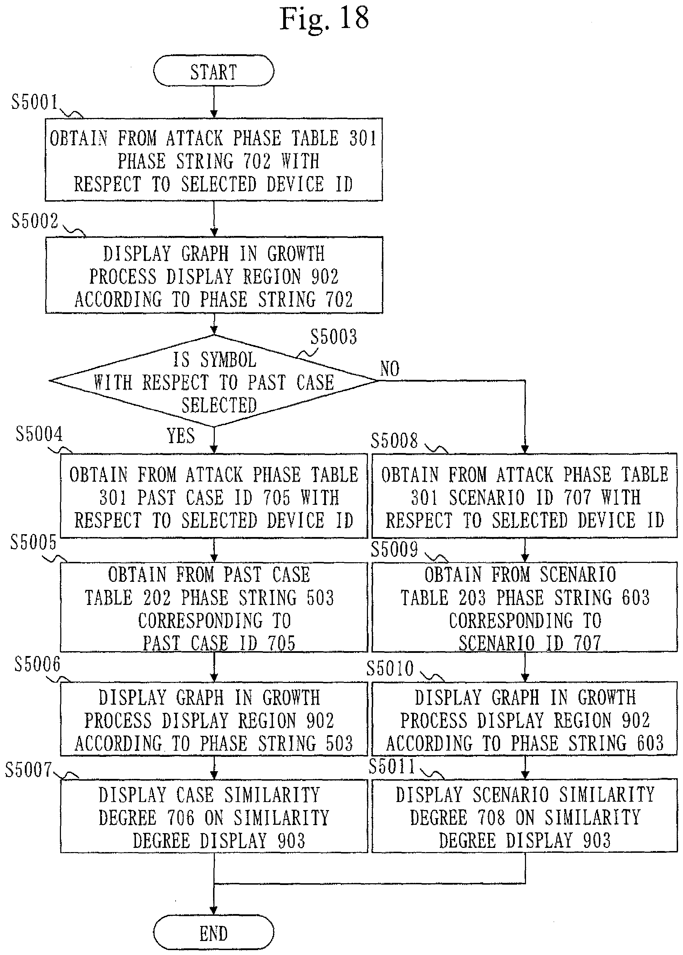

Each variable value and each counter value described with reference to Figs. 13 and 18 are managed by a register of the CPU 101 or the RAM 102, for example.

In step S1001, the phase string generation unit 1002 generates an attack phase string (details of which will be described later) for the PC 12, based on the occurred event recorded in the extracted log.

Next, in step S1002, the similarity degree calculation unit 1003 calculates a similarity degree between the attack phase string generated in step S1001 and the past case, and calculates a similarity degree between the attack phase string generated in step S1001 and the attack scenario.

Further, in step S1003, the attack status visualization unit 1004 displays the attack phase string generated in step S1001 and the similarity degrees calculated in step S1002 on the displaying display 105.

Fig. 13 describes the process in step S1001 in detail.

In step S2001, the phase string generation unit 1002 determines whether the maximum phase 703 with respect to the PC 112 corresponding to the device ID associated with the occurred event recorded in the extracted log is zero.

If the maximum phase 703 is zero in step S2001, the phase string generation unit 1002 executes step S2004.

If the maximum phase 703 is not zero in step S2001, the phase string generation unit 1002 determines whether a difference between the event occurrence date and time and the update date and time 704 with respect to the PC 112 is $T_1$ or more, in step S2002.

If the difference between the dates and times is $T_1$ or more in step S2002, the phase string generation unit 1002 initializes the record in the attack phase table 301 with respect to the PC 112.

Specifically, the phase string generation unit 1002 updates the phase string 702 to 0, updates the maximum phase 703 to 0, and updates the update date and time 704 to no record (-).

If the difference between the dates and times is less than $T_1$ in step S2002, the phase string generation unit 1002 executes step S2004.

In step S2004, the phase string generation unit 1002 determines based on the event ID 402 whether an event ID matching the event ID of the occurred event recorded in the extracted log is present in the attack event table 201.

If the event ID matching the event ID of the occurred event recorded in the log is not present in the attack event table 201 in step S2004, the phase string generation unit 1002 finishes the process.

On the other hand, if the event ID matching the event ID of the occurred event recorded in the log is present in the attack event table 201 in step S2004, the phase string generation unit 1002 adds the phase value of the corresponding event to the end of the phase string 702 in the record in the attack phase table 301 with respect to the PC 112, in step S2005.

Next, in step S2006, the phase string generation unit 1002 compares the phase value of the event mentioned before and obtained from the attack event table 201 and the maximum phase 703 in the record in the attack phase table 301 with respect to the PC 112.

If the phase value is not larger than the maximum phase 703 in step S2006, the phase string generation unit 1002 updates the update date and time 704 in the record with respect to the PC 112in the attack phase table 301, by replacing the update and time 704 with the event occurrence date and time of the occurred event, in step S2008, and then finishes the process.

On the other hand, if the phase value is larger than the maximum phase 703 in step S2006, the phase string generation unit 1002 updates the maximum phase 703 in the record with respect to the PC 112 in the attack phase table 301, by replacing the maximum phase 703 with this phase value in step S2007, and then executes step S2008.

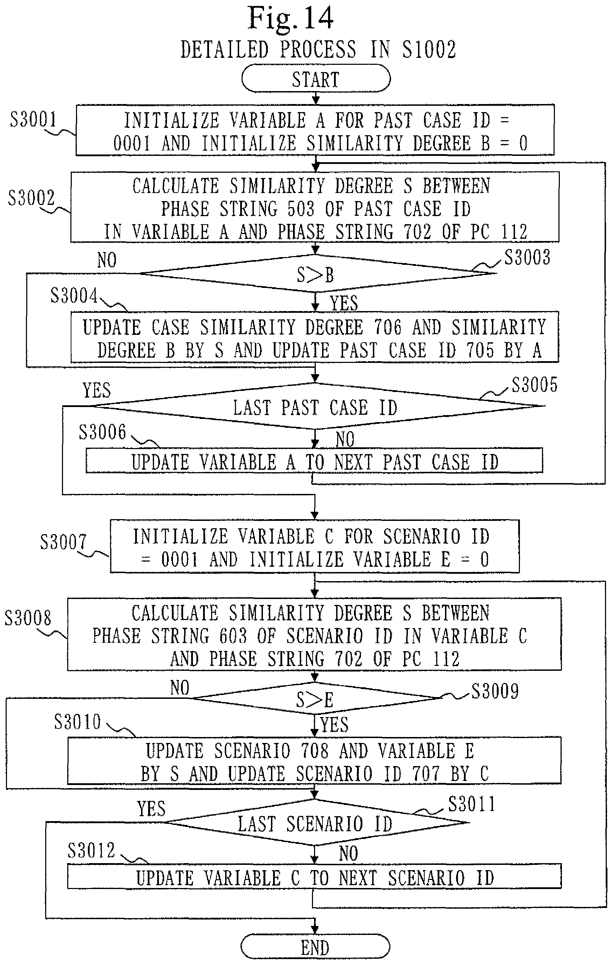

Fig. 14 describes the process in step S1002 in detail.

In step S3001, the similarity degree calculation unit 1003 initializes a variable A for storing the past case ID 501 in the past case table 202 by 0001 that is the ID listed first in the table and initializes a variable B for storing the similarity degree by 0.

Next, the similarity degree calculation unit 1003 calculates a similarity degree S between the phase string 503 associated with the past case ID stored in the variable A and the phase string 702 of the PC 112, in step S3002.

Specifically, the similarity degree S is calculated, using the following equation when a function for calculating a Levenshtein edit distance is indicated by D, the phase string 503 associated with the past case ID in the variable A is indicated by PI, and the phase string 702 of the PC 112 is indicated by P2.

The function for calculating a Levenshtein edit distance is configured to calculate an edit distance between two character strings with insertion, deletion, or substitution used as one edit operation.

With respect to the following equation, |x| indicates the length of a character string x, and Max () indicates a function for returning one of a plurality of arguments having a largest argument value.

[Equation 1]

$$S = 1 - \frac{D(P1, P2)}{Max(|P1|, |P2|)}$$

Next, the similarity degree calculation unit 1003 determines whether the similarity degree S calculated in step S3002 is larger than the similarity degree in the variable B, in step S3003.

If the similarity degree S is larger than the similarity degree in the variable B in step S3003, the similarity degree calculation unit 1003 updates the variable B and the case similarity degree 706 with respect to the PC 112 in the attack phase table 301 by the similarity degree S, and updates the past case ID 705 with respect to the PC 112 in the attack phase table 301 by the variable A, in step S3004.

Next, in step S3005, the similarity degree calculation unit 1003 checks whether the variable A is the past case ID listed last in the past case table 202. If the variable A is not the last past case ID, the similarity degree calculation unit 1003 updates the variable A to the next past case ID in the past case table 202, in step S3006. Then, the similarity degree calculation unit 1003 repeats the processes after step S3002.

On the other hand, if the variable A is the last past case ID in the past case table 202 in step S3005, the similarity degree calculation unit 1003 next executes step S3007.

In step S3007, the similarity degree calculation unit 1003 respectively initializes a variable C for storing the scenario ID 601 in the attack scenario table 203 by 0001 that is the ID listed first in the table and initializes a variable E for storing the similarity degree by 0.

Next, the similarity degree calculation unit 1003 calculates a similarity degree S between the phase string 603 associated with the scenario ID in the variable C and the phase string 702 of the PC 112, in step S3008.

The similarity degree S is calculated using the same equation as in step S3002
Next, the similarity degree calculation unit 1003 determines whether the similarity degree S calculated in step S3008 is larger than the similarity degree in the variable E, in step S3009.

If the similarity degree S is larger than the similarity degree stored in the variable E in step S3009, the similarity degree calculation unit 1003 updates the scenario similarity degree 708 with respect to the PC 112 in the attack phase table 301 and the variable E by the similarity degree S, and updates the scenario ID 707 with respect to the PC 112 in the attack phase table 301 by the value of the variable C, in step S3010.

Next, the similarity degree calculation unit 1003 checks whether the variable C is the scenario ID listed last in the attack scenario table 203 in step S3011. If the variable C is not the last scenario ID, the similarity degree calculation unit 1003 updates the variable C to the next scenario ID in the attack scenario table 203, in step S3012. Then, the similarity degree calculation unit 1003 repeats the processes after step S3008.

On the other hand, if the variable C is the last scenario ID in the attack scenario table in step S3011, the similarity degree calculation unit 1003 finishes the process.

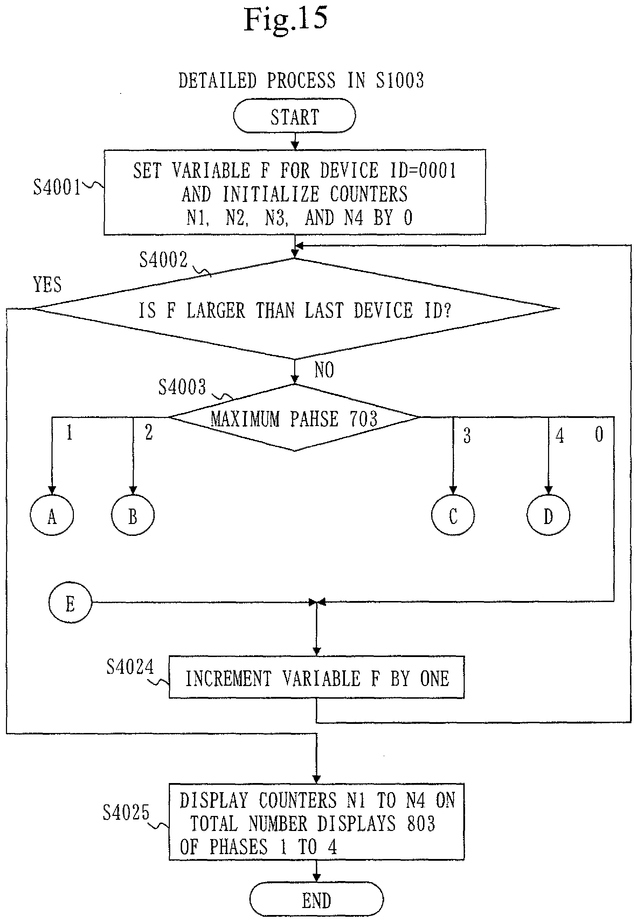

Figs. 15 to 17 describe the process in step S1003 in detail.

In step S4001, the attack status visualization unit 1004 sets 0001 in a variable F for the device ID, and initializes four counters N1 to N4 to 0 (see Fig. 15).

Next, in step S4002, the attack status visualization unit 1004 checks whether the device ID in the variable F is larger than the last device ID (see Fig. 15).

If the device ID of the variable F is larger than the last device ID in step S4002, the attack status visualization unit 1004 respectively displays values of the counters N1 to N4 on the total number displays 803 of the phases 1 to 4, in step S4025 (see Fig. 15).

If the device ID of the variable F is not larger than the last device ID in step S4002, the attack status visualization unit 1004 changes a subsequent process according to the value of the maximum phase 703 in step S4003.

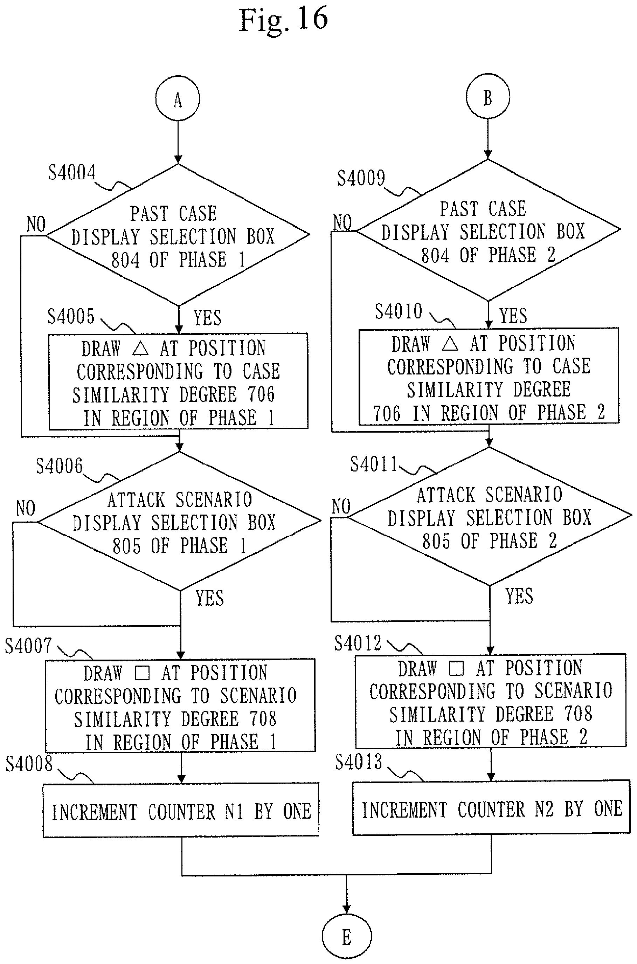

If the maximum phase 703 is 1, the attack status visualization unit 1004 determines whether the past case display selection box 804 of the phase 1 has been checked, in step S4004 (see Fig. 16).

If the past case display selection box 804 has been checked in step S4004, the attack status visualization unit 1004 draws the reference symbol 'Δ' at a position corresponding to the value of the case similarity degree 706 in the similarity degree display region 806 of the phase 1, in step S4005 (see Fig. 16).

Next, the attack status visualization unit 1004 determines whether the attack scenario display selection box 805 of the phase 1 has been checked, in step S4006 (see Fig. 16).

If the attack scenario display selection box 805 has been checked in step S4006, the attack status visualization unit 1004 draws '□' at a position corresponding to the value of the scenario similarity degree 708 in the similarity degree display region 806 of the phase 1, in step S4007 (see Fig. 16).

Next, the attack status visualization unit 1004 increments the counter N1 by 1 in step S4008 (see Fig. 16).

Then, the attack status visualization unit 1004 increments the variable F that stores the device ID by 1 in step S4024, and then repeats the processes after S4002.

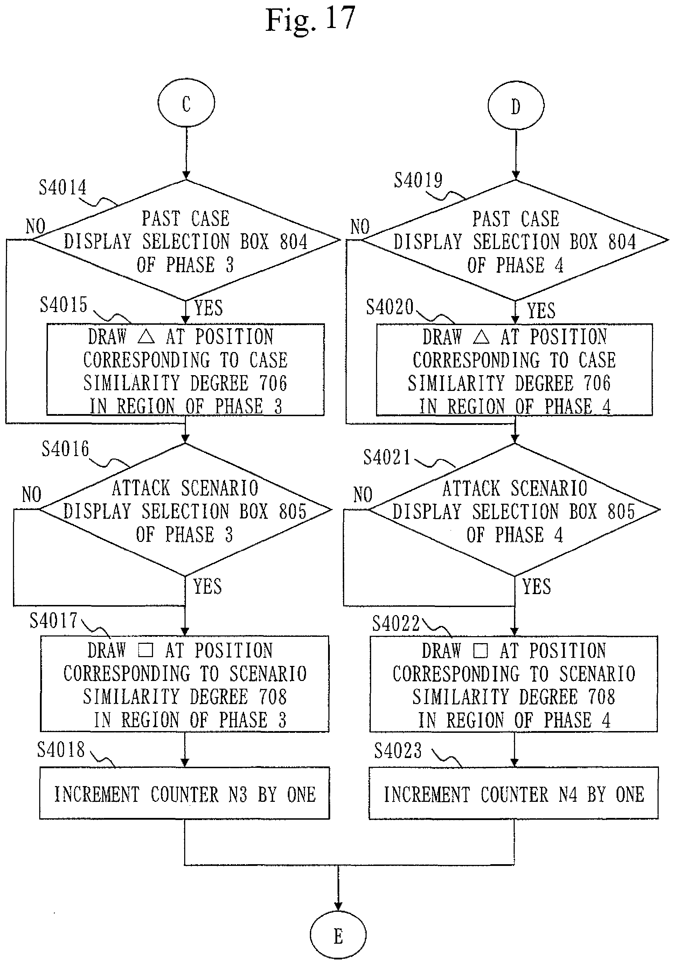

Also if the maximum phase is 2, 3, or 4 in step S4003, the attack status visualization unit 1004 performs similar processes, as in Figs. 16 and 17.

Since the operation of the attack status visualization unit 1004 is the same also if the maximum phase is 2, 3, or 4, description of the operation of the attack status visualization unit 1004 will be omitted.

Meanwhile, if the maximum phase is 0 in step S4003, the attack status visualization unit 1004 increments the variable F that stores the device ID by 1 in step S4024, and repeats the processes after step S4002.

Fig. 18 explains a process when the security growth process display screen 901 is displayed. The security growth process display screen 901 is displayed when the reference symbol Δ or □ displayed on display of security threat distributions in Fig. 10 is selected by the mouse 107.

In step S5001, the attack status visualization unit 1004 obtains from the attack phase table 301 the phase string 702 with respect to the device ID that has been selected.

Next, in step S5002, the attack status visualization unit 1004 displays a graph in the growth process display region 902, according to the phase string 702 obtained before.

Next, in step S5003, the attack status visualization unit 1004 checks whether the symbol with respect to the past case is selected.

If it is found out that the symbol with respect to the past case is selected in the check of step S5003, the attack status visualization unit 1004 obtains from the attack phase table 301, the past case ID 705 with respect to the selected device ID, in step S5004.

Next, in step S5005, the attack status visualization unit 1004 obtains from the past case table 202 the phase string 503 corresponding to the past case ID 705.

Next, in step S5006, the attack status visualization unit 1004 displays a graph in the growth process display region 902 according to the phase string 503.

Next, in step S5007, the attack status visualization unit 1004 displays the case similarity degree 706 on the similarity degree display 903, and finishes the process.

If the symbol with respect to the past case is not selected in step S5003, the attack status visualization unit 1004 executes processes from step S5008 to step S5011, displays a graph in the growth process display region 902 according to the phase string 603, and displays the scenario similarity degree 708 on the similarity degree display 903 (description will be omitted because the processes are similar to those in step S5004 to step S5007.).

As described above, the threat visualization system according to this embodiment divides a threat growth process into the attack phases, and visualizes and displays the threat growth process, based on similarity with the past case or the attack scenario. Thus, a user may determine importance of a threat based on the similarity.

Since the threat visualization system according to this embodiment visualizes and displays the threat growth process, the user may grasp to what extent the threat is growing.

As described above, in this embodiment, the description has been given about a threat visualization method in which the threat in progress is displayed based on a similarity degree with the past case, for each phase, using the attack event table and the past case table. In the attack event table, each threat is sorted out into one of the attack phases. In the past case table, events that occurred in each past case are recorded after being sorted out into one of the attack phases.

Further, in this embodiment, the description has been given about a threat visualization method in which the threat in progress is displayed based on a similarity degree with the attack scenario, for each phase, using the attack event table and the attack scenario table. In the attack event table, each threat is sorted out into one of the attack phases. In the attack scenario table, events that are predicted to occur based on each attack scenario are recorded after being sorted out into one of the attack phases..

In this embodiment, the description has been given about a threat visualization method in which each device where a threat in progress has occurred is totalized and displayed, for each phase of an attack that made intrusion.

In this embodiment, the description has been given about a threat visualization method in which a threat growth process is displayed together with the growth process of the similar past case in the form of graphs.

In this embodiment, the description has been given about a threat visualization method in which a threat growth process is displayed together with the growth process of the similar attack scenario in the form of graphs.

Reference Signs List

100: threat visualization system, 1001: table storage unit, 1002: phase string generation unit, 1003: similarity degree calculation unit, 1004: attack status visualization unit, 1005: input unit, 1006: output unit, 1007: communication unit

**Claims**

1. An information processing apparatus (100) comprising:

> an attack event table storage unit (1001) that stores an attack event table indicating, for each of a plurality of events caused from an attack on an information system, a progress degree of the attack at a time when each event occurs;
> an attack event progress degree string table storage unit (1001) that stores an attack event progress degree string table indicating a character string as an attack event progress degree string, the character string being obtained by concatenating the progress degrees of corresponding events according to an occurrence pattern of events in an attack sequence;
> an occurred event progress degree string derivation unit (1002) that concatenates the progress degrees of corresponding events according to the occurrence pattern of the events that have occurred in the information system, and derives an occurred event progress degree string that is a character string;

a similarity degree calculation unit (1003) that calculates a similarity degree between the occurred event progress degree string derived by the occurred event progress degree string derivation unit and the attack event progress degree string indicated in the attack event progress degree string table using a function for calculating a Levenshtein edit distance; and

an attack status visualization unit (1004) that visualizes a progress status of the attack on the information system, based on the occurred event progress degree string obtained by the occurred event progress degree string derivation unit and a result of calculation of the similarity degree by the similarity degree calculation unit.

2. The information processing apparatus according to claim 1,

wherein the attack event progress degree string table storage unit stores the attack event progress degree string table indicating the character string as the attack event progress degree string, for each of a plurality of attack sequences, the character string being obtained by concatenating the progress degrees of corresponding events according to the occurrence pattern of events in each attack sequence;

wherein the similarity degree calculation unit calculates the similarity degree between the occurred event progress degree string derived by the occurred event progress degree string derivation unit and each of a plurality of the attack event progress degree strings indicated in the attack event progress degree string table; and

wherein the attack status visualization unit extracts a maximum progress degree out of the progress degrees included in the occurred event progress degree string derived by the occurred event progress degree string derivation unit,

extracts a maximum similarity degree out of a plurality of the similarity degrees calculated by the similarity degree calculation unit, and

visualizes the progress status of the attack on the information system, using the maximum progress degree extracted and the maximum similarity degree extracted.

3. The information processing apparatus according to claim 2,

wherein the information processing apparatus targets an information system including a plurality of terminal devices;

wherein the occurred event progress degree string derivation unit concatenates, for each terminal device included in the information system, the progress degrees of corresponding events according to the occurrence pattern of events that have occurred, and derives the occurred event progress degree string that is the character string;

wherein the similarity degree calculation unit calculates, for each terminal device, the similarity degree between the occurred event progress degree string derived by the occurred event progress degree string derivation unit and each of the plurality of the attack event progress degree strings indicated in the attack event progress degree string table; and

wherein the attack status visualization unit extracts, for each terminal device, the maximum progress degree out of the progress degrees included in the occurred event progress degree string derived by the occurred event progress degree string derivation unit,

extracts, for each terminal device, the maximum similarity degree out of the plurality of the similarity degrees calculated by the similarity degree calculation unit, and

visualizes the progress status of the attack on the information system, using the maximum progress degree and the maximum similarity degree extracted for each terminal device.

4. The information processing apparatus according to claim 3,

wherein the attack status visualization unit plots a relationship between the maximum progress degree and the maximum similarity degree extracted for each terminal device and displays graphs indicating distributions of the maximum progress degrees and the maximum similarity degrees of the plurality of terminal devices, and visualizes the progress of the attack on the information system.

5. The information processing apparatus according to claim 4,

wherein the attack status visualization unit displays, for each progress degree, the number of the terminal devices whose maximum progress degrees are the progress degree in question, and visualizes the progress status of the attack on the information system.

6. The information processing apparatus according to claim 1,

wherein the information processing apparatus targets the information system including the plurality of terminal devices;

wherein the attack event progress degree string table storage unit stores the attack event progress degree string table indicating the character string as the attack event progress degree string for each of the plurality of attack sequences, the character string being obtained by concatenating the progress degrees of the corresponding events according to the occurrence pattern of the events in each attack sequence;

wherein the occurred event progress degree string derivation unit concatenates, for each terminal device included in the information system, the progress degrees of the corresponding events according to the occurrence pattern of the events that have occurred in each terminal device, and derives the occurred event progress degree string that is the character string;

wherein the similarity degree calculation unit calculates, for each terminal device, the similarity degree between the occurred event progress degree string obtained by the occurred event progress degree string derivation unit and each of the plurality of the attack event progress degree strings indicated in the attack event progress degree string table; and

wherein the attack status visualization unit selects the attack event progress degree string used for calculating a maximum similarity degree out of the plurality of the similarity degrees calculated for a specific terminal device, and

displays graphs indicating a progress degree transition in the occurred event progress degree string of the specific terminal device and a progress degree transition in the attack event progress degree string selected, and visualizes the progress status of the attack on the information system.

7. The information processing apparatus according to claim 1,
wherein the attack event progress degree string table storage unit stores the attack event progress degree string table indicating the attack event progress degree string for an attack sequence of a past attack.

8. The information processing apparatus according to claim 1,
wherein the attack event progress degree string table storage unit stores the attack event progress degree string table indicating the attack event progress degree string for an attack sequence of an assumed attack.

9. An information processing method to be performed by a computer that includes:

an attack event table storage unit that stores an attack event table indicating, for each of a plurality of events caused from an attack on an information system, a progress degree of the attack at a time when each event occurs, and

an attack event progress degree string table storage unit that stores an attack event progress degree string table indicating a character string as an attack event progress degree string, the character string being obtained by concatenating the progress degrees of corresponding events according to an occurrence pattern of events in an attack sequence,

the information processing method comprising:

by the computer, concatenating the progress degrees of corresponding events according to the occurrence pattern of the events that have occurred in the information system, and deriving an occurred event progress degree string that is a character string;

by the computer, calculating a similarity degree between the occurred event progress degree string derived and the attack event progress degree string indicated in the attack event progress degree string table using a function for calculating a Levenshtein edit distance; and

by the computer, visualizing a progress status of the attack on the information system, based on the occurred event progress degree string derived and a result of calculation of the similarity degree.

10. A computer program comprising instructions that when executed by a computer cause the computer to function as the information processing apparatus according to claim 1.

**Patentansprüche**

1. Informationsverarbeitungsvorrichtung (100), umfassend:

eine Angriffsereignistabelle-Speichereinheit (1001), die eine Angriffsereignistabelle, anzeigend, für jedes einer Vielzahl von Ereignissen, die durch einen Angriff auf ein Informationssystem herbeigeführt werden, eines Fortschreitungsgrades des Angriffs zu einem Zeitpunkt, zu dem jedes Ereignis auftritt, speichert;

eine Angriffsereignisfortschrittsgrad-Stringtabelle-Speichereinheit (1001), die eine Angriffsereignisfortschrittsgrad-Stringtabelle, anzeigend einen Zeichenstring als einen Angriffsereignisfortschrittsgradstring, speichert, wobei der Zeichenstring erhalten wird durch Verketten der Fortschrittsgrade entsprechender Ereignisse gemäß eines Auftretensmusters von Ereignissen in einer Angriffsfolge;

eine Aufgetretenes-Ereignis-Fortschrittsgrad-String-Ableitungseinheit (1002), die die Fortschrittsgrade entsprechender Ereignisse verkettet gemäß des Auftretensmusters der Ereignisse, die im Informationssystem aufgetreten sind, und einen Aufgetretenes-Ereignis-Fortschrittsgrad-String, der ein Zeichenstring ist, ableitet;

eine Ähnlichkeitsgradberechnungseinheit (1003), die einen Ähnlichkeitsgrad zwischen dem Aufgetretenes-Ereignis-Fortschrittsgrad-String, der durch die Aufgetretenes-Ereignis-Fortschrittsgrad-String-Ableitungseinheit abgeleitet wurde, und dem Angriffsereignisfortschrittsgrad-String, der in der Angriffsereignisfortschrittsgrad-Stringtabelle angegeben ist, berechnet unter Verwendung einer Funktion zum Berechnen einer Levenshtein-Editierdistanz; und

eine Angriffsstatus-Visualisierungseinheit (1004), die einen Fortschrittsstatus des Angriffs auf das Informationssystem visualisiert auf Grundlage des durch die Aufgetretenes-Ereignis-Fortschrittsgrad-String-Ableitungseinheit erhaltenen Aufgetretenes-Ereignis-Fortschrittsgrad-Strings und eines Ergebnisses der Berechnung des Ähnlichkeitsgrades durch die Ähnlichkeitsgradberechnungseinheit.

2. Informationsverarbeitungsvorrichtung nach Anspruch 1, wobei die Angriffsereignisfortschrittsgrad-Stringtabelle-Speichereinheit die Angriffsereignisfortschrittsgrad-Stringtabelle, anzeigend den Zeichenstring als den Angriffsereignisfortschrittsgrad-String, speichert für jede einer Vielzahl von Angriffsfolgen, wobei der Zeichenstring erhalten wird durch Verketten der Fortschrittsgrade entsprechender Ereignisse gemäß des Auftretensmusters von Ereignissen in jeder Angriffsfolge;

wobei die Ähnlichkeitsgradberechnungseinheit den Ähnlichkeitsgrad zwischen dem Aufgetretenes-Ereignis-Fortschrittsgrad-String, der durch die Aufgetretenes-Ereignis-Fortschrittsgrad-String-Ableitungseinheit abgeleitet wurde, und jedes der Vielzahl von Angriffsereignisfortschrittsgrad-Strings, die in der Angriffsereignisfortschrittsgrad-Stringtabelle angegeben sind, berechnet; und

wobei die Angriffsstatus-Visualisierungseinheit einen maximalen Fortschrittsgrad aus den Fortschrittsgraden extrahiert, die in dem durch die Aufgetretenes-Ereignis-Fortschrittsgrad-String-Ableitungseinheit abgeleiteten Aufgetretenes-Ereignis-Fortschrittsgrad-String enthalten sind, einen maximalen Ähnlichkeitsgrad aus einer Vielzahl der durch die Ähnlichkeitsgradberechnungseinheit berechneten Ähnlichkeitsgraden extrahiert, und den Fortschrittsstatus des Angriffs auf das Informationssystem visualisiert unter Verwendung des extrahierten maximalen Fortschrittsgrades und des extrahierten maximalen Ähnlichkeitsgrades.

3. Informationsverarbeitungsvorrichtung nach Anspruch 2,
wobei die Informationsverarbeitungsvorrichtung auf ein Informationssystem abzielt, das eine Vielzahl von Endgeräten umfasst;

wobei die Aufgetretenes-Ereignis-Fortschrittsgrad-String-Ableitungseinheit für jedes im Informationssystem enthaltene Endgerät die Fortschrittsgrade entsprechender Ereignisse verkettet gemäß des Auftretensmusters von Ereignissen, die aufgetreten sind, und den Aufgetretenes-Ereignis-Fortschrittsgrad-String, der ein Zeichenstring ist, ableitet;

wobei die Ähnlichkeitsgradberechnungseinheit für jedes Endgerät den Ähnlichkeitsgrad zwischen dem Aufgetretenes-Ereignis-Fortschrittsgrad-String, der durch die Aufgetretenes-Ereignis-Fortschrittsgrad-String-Ableitungseinheit abgeleitet wurde, und jedem der Vielzahl von Angriffsereignisfortschrittsgrad-Strings, die in der Angriffsereignisfortschrittsgrad-Stringtabelle angegeben sind, berechnet; und

wobei die Angriffsstatus-Visualisierungseinheit für jedes Endgerät den maximalen Fortschrittsgrad aus den Fortschrittsgraden extrahiert, die in dem durch die Aufgetretenes-Ereignis-Fortschrittsgrad-String-Ableitungseinheit abgeleiteten Aufgetretenes-Ereignis-Fortschrittsgrad-String enthalten sind,

für jedes Endgerät den maximalen Ähnlichkeitsgrad aus der Vielzahl der durch die Ähnlichkeitsgradberechnungseinheit berechneten Ähnlichkeitsgraden extrahiert, und

den Fortschrittsstatus des Angriffs auf das Informationssystem visualisiert unter Verwendung des maximalen Fortschrittsgrades und des maximalen Ähnlichkeitsgrades, die für jedes Endgerät extrahiert wurden.

4. Informationsverarbeitungsvorrichtung nach Anspruch 3,
wobei die Angriffsstatus-Visualisierungseinheit eine Beziehung zwischen dem maximalen Fortschrittsgrad und dem für jedes Endgerät extrahierten maximalen Ähnlichkeitsgrad aufträgt und Graphen anzeigt, die Verteilungen der maximalen Fortschrittsgrade und der maximalen Ähnlichkeitsgrade der Vielzahl von Endgeräten anzeigen, und den Fortschritt des Angriffs auf das Informationssystem visualisiert.

5. Informationsverarbeitungsvorrichtung nach Anspruch 4,
wobei die Angriffsstatus-Visualisierungseinheit für jeden Fortschrittsgrad die Anzahl der Endgeräte anzeigt, deren maximale Fortschrittsgrade der betroffene Fortschrittsgrad sind, und den Fortschrittsstatus des Angriffs auf das Informationssystem visualisiert.

6. Informationsverarbeitungsvorrichtung nach Anspruch 1, wobei die Informationsverarbeitungsvorrichtung auf das Informationssystem, umfassend die Vielzahl von Endgeräten, abzielt;

wobei die Angriffsereignisfortschrittsgrad-Stringtabelle-Speichereinheit die Angriffsereignisfortschrittsgrad-Stringtabelle, anzeigend den Zeichenstring als den Angriffsereignisfortschrittsgrad-String für jede der Vielzahl von Angriffsfolgen, speichert, wobei der Zeichenstring erhalten wird durch Verketten der Fortschrittsgrade entsprechender Ereignisse gemäß des Auftretensmusters von Ereignissen in jeder Angriffsfolge;

wobei die Aufgetretenes-Ereignis-Fortschrittsgrad-String-Ableitungseinheit für jedes im Informationssystem enthaltene Endgerät die Fortschrittsgrade der entsprechenden Ereignisse verkettet gemäß des Auftretensmusters der Ereignisse, die in jedem Endgerät aufgetreten sind, und den Aufgetretenes-Ereignis-Fortschrittsgrad-String, der ein Zeichenstring ist, ableitet;

wobei die Ähnlichkeitsgradberechnungseinheit für jedes Endgerät den Ähnlichkeitsgrad zwischen dem Aufgetretenes-Ereignis-Fortschrittsgrad-String, der durch die Aufgetretenes-Ereignis-Fortschrittsgrad-String-Ableitungseinheit abgeleitet wurde, und jedem der Vielzahl von Angriffsereignisfortschrittsgrad-Strings, die in der Angriffsereignisfortschrittsgrad-Stringtabelle angegeben sind, berechnet; und

wobei die Angriffsstatus-Visualisierungseinheit den Angriffsereignisfortschrittsgrad-String, der zum Berechnen eines maximalen Ähnlichkeitsgrades verwendet wird, aus der Vielzahl der für ein bestimmtes Endgerät berechneten Ähnlichkeitsgrade auswählt, und

Graphen anzeigt, die einen Fortschrittsgradübergang im Aufgetretenes-Ereignis-Fortschrittsgrad-String des bestimmten Endgerätes und einen Fortschrittsgradübergang im ausgewählten Angriffsereignisfortschrittsgrad-String anzeigen, und den Fortschrittsstatus des Angriffs auf das Informationssystem visualisiert.

7.  Informationsverarbeitungsvorrichtung nach Anspruch 1,
    wobei die Angriffsereignisfortschrittsgrad-String-Tabelle-Speichereinheit die Angriffsereignisfortschrittsgrad-Stringtabelle speichert, die den Angriffsereignisfortschrittsgrad-String für eine Angriffsfolge eines vergangenen Angriffs anzeigt.

8.  Informationsverarbeitungsvorrichtung nach Anspruch 1,
    wobei die Angriffsereignisfortschrittsgrad-Stringtabelle-Speichereinheit die Angriffsereignisfortschrittsgrad-Stringtabelle, anzeigend den Angriffsereignisfortschrittsgrad-String für eine Angriffsfolge eines angenommenen Angriffs, speichert.

9.  Informationsverarbeitungsverfahren, das durch einen Computer durchzuführen ist, der aufweist:

    eine Angriffsereignistabelle-Speichereinheit, die eine Angriffsereignistabelle, anzeigend, für jedes einer Vielzahl von Ereignissen, durch einen Angriff auf ein Informationssystem herbeigeführt wurden, eines Fortschreitungsgrades des Angriffs zu einem Zeitpunkt, zu dem jedes Ereignis auftritt, speichert;

eine Angriffsereignisfortschrittsgrad-Stringtabelle-Speichereinheit, die eine Angriffsereignisfortschrittsgrad-Stringtabelle, anzeigend einen Zeichenstring als einen Angriffsereignisfortschrittsgrad-String, speichert, wobei der Zeichenstring erhalten wird durch Verketten der Fortschrittsgrade entsprechender Ereignisse gemäß eines Auftretensmusters von Ereignissen in einer Angriffsfolge;

wobei das Informationsverarbeitungsverfahren umfasst:

durch den Computer, Verketten der Fortschrittsgrade entsprechender Ereignisse gemäß des Auftretensmusters der Ereignisse, die im Informationssystem aufgetreten sind, und Ableiten eines Aufgetretenes-Ereignis-Fortschrittsgrad-Strings, der ein Zeichenstring ist;

durch den Computer, Berechnen eines Ähnlichkeitsgrades zwischen dem abgeleiteten Aufgetretenes-Ereignis-Fortschrittsgrad-String und dem Angriffsereignisfortschrittsgrad-String, der in der Angriffsereignisfortschrittsgrad-Stringtabelle angegeben ist, unter Verwendung einer Funktion zum Berechnen einer Levenshtein-Editierdistanz; und

durch den Computer, Visualisieren eines Fortschrittsstatus des Angriffs auf das Informationssystem auf Grundlage des abgeleiteten Aufgetretenes-Ereignis-Fortschrittsgrad-Strings und eines Ergebnisses der Berechnung des Ähnlichkeitsgrades.

10. Computerprogramm, umfassend Anweisungen, die, bei Ausführung durch einen Computer, den Computer veranlassen, als die Informationsverarbeitungsvorrichtung nach Anspruch 1 zu funktionieren.

## Revendications

1.  Appareil de traitement d'informations (100) comprenant :

    une unité de stockage de table d'événements d'attaque (1001) qui stocke une table d'événements d'attaque indiquant, pour chaque événement parmi une pluralité d'événements occasionnés par une attaque sur un système d'information, un degré de progression de l'attaque à un moment où chaque événement se produit ;

une unité de stockage de table de chaîne de degrés de progression d'événements d'attaque (1001) qui stocke une table de chaîne de degrés de progression d'événements d'attaque indiquant une chaîne de caractères en tant qu'une chaîne de degrés de progression d'événements d'attaque, la chaîne de caractères étant obtenue en concaténant les degrés de progression d'événements correspondants selon un motif d'occurrence d'événements dans une séquence d'attaque ;

une unité de dérivation de chaîne de degrés de progression d'événements survenus (1002) qui concatène les degrés de progression d'événements correspondants selon le modèle d'occurrence des événements qui se sont produits dans le système d'information, et qui dérive une chaîne de degrés de progression d'événements survenus qui correspond à une chaîne de caractères ;

une unité de calcul de degré de similarité (1003) qui calcule un degré de similarité entre la chaîne de degrés de progression d'événements survenus dérivée par l'unité de dérivation de chaîne de degrés de progression d'événements survenus et la chaîne de degrés de progression d'événements d'attaque indiquée dans la table de chaîne de degrés de progression d'événements d'attaque en utilisant une fonction pour calculer une distance de modification de Levenshtein ; et

une unité de visualisation d'état d'attaque (1004) qui visualise un état de progression de l'attaque sur le système d'information, sur la base de la chaîne de degrés de progression d'événements survenus obtenue par l'unité de dérivation de chaîne de degrés de progression d'événements survenus et d'un résultat de calcul du degré de similarité par l'unité de calcul de degré de similarité.

2. Appareil de traitement d'informations selon la revendication 1,

dans lequel l'unité de stockage de table de chaîne de degrés de progression d'événements d'attaque stocke la table de chaîne de degrés de progression d'événements d'attaque indiquant la chaîne de caractères en tant que la chaîne de degrés de progression d'événements d'attaque, pour chacune d'une pluralité de séquences d'attaque, la chaîne de caractères étant obtenue en concaténant les degrés de progression d'événements correspondants selon le motif d'occurrence d'événements dans chaque séquence d'attaque ;

dans lequel l'unité de calcul de degré de similarité calcule le degré de similarité entre la chaîne de degrés de progression d'événements survenus dérivée par l'unité de dérivation de chaîne de degrés de progression d'événements survenus et chacune d'une pluralité des chaînes de degrés de progression d'événements d'attaque indiquées dans la table de chaîne de degrés de progression d'événements d'attaque ; et

dans lequel l'unité de visualisation d'état d'attaque : extrait un degré de progression maximal des degrés de progression inclus dans la chaîne de degrés de progression d'événements survenus dérivée par l'unité de dérivation de chaîne de degrés de progression d'événements survenus ;

extrait un degré de similarité maximal d'une pluralité des degrés de similarité calculés par l'unité de calcul de degré de similarité ; et

visualise l'état de progression de l'attaque sur le système d'information, en utilisant le degré de progression maximal extrait et le degré de similarité maximal extrait.

3. Appareil de traitement d'informations selon la revendication 2,

dans lequel l'appareil de traitement d'informations cible un système d'information comprenant une pluralité de dispositifs terminaux ;

dans lequel l'unité de dérivation de chaîne de degrés de progression d'événements survenus concatène, pour chaque dispositif terminal inclus dans le système d'information, les degrés de progression d'événements correspondants selon le modèle d'occurrence d'événements qui se sont produits, et dérive la chaîne de degrés de progression d'événements survenus, laquelle correspond à la chaîne de caractères ;

dans lequel l'unité de calcul de degré de similarité calcule, pour chaque dispositif terminal, le degré de similarité entre la chaîne de degrés de progression d'événements survenus dérivée par l'unité de dérivation de chaîne de degrés de progression d'événements survenus et chacune de la pluralité des chaînes de degrés de progression d'événements d'attaque indiquées dans la table de chaîne de degrés de progression d'événements d'attaque ; et

dans lequel l'unité de visualisation d'état d'attaque : extrait, pour chaque dispositif terminal, le degré de progression maximal des degrés de progression inclus dans la chaîne de degrés de progression d'événements survenus dérivée par l'unité de dérivation de chaîne de degrés de progression d'événements survenus ;

extrait, pour chaque dispositif terminal, le degré de similarité maximal de la pluralité des degrés de similarité calculés par l'unité de calcul de degré de similarité ; et

visualise l'état de progression de l'attaque sur le système d'information, en utilisant le degré de progression maximal et le degré de similarité maximal extrait pour chaque dispositif terminal.

4. Appareil de traitement d'informations selon la revendication 3,
dans lequel l'unité de visualisation d'état d'attaque trace une relation entre le degré de progression maximal et le degré de similarité maximal extrait pour chaque dispositif terminal, et affiche des graphes indiquant des répartitions des degrés de progression maximaux et des degrés de similarité maximaux de la pluralité de dispositifs terminaux, et visualise la progression de l'attaque sur le système d'information.

5. Appareil de traitement d'informations selon la revendication 4,
dans lequel l'unité de visualisation d'état d'attaque affiche, pour chaque degré de progression, le nombre des dispositifs terminaux dont les degrés de progression maximaux correspondent au degré de progression en question, et visualise l'état de progression de l'attaque sur le système d'information.

6. Appareil de traitement d'informations selon la revendication 1,

dans lequel l'appareil de traitement d'informations cible le système d'information incluant la pluralité de dispositifs terminaux ;
dans lequel l'unité de stockage de table de chaîne de degrés de progression d'événements d'attaque stocke la table de chaîne de degrés de progression d'événements d'attaque indiquant la chaîne de caractères en tant que la chaîne de degrés de progression d'événements d'attaque pour chacune de la pluralité de séquences d'attaque, la chaîne de caractères étant obtenue en concaténant les degrés de progression des événements correspondants selon le motif d'occurrence des événements dans chaque séquence d'attaque ;
dans lequel l'unité de dérivation de chaîne de degrés de progression d'événements survenus concatène, pour chaque dispositif terminal inclus dans le système d'information, les degrés de progression des événements correspondants selon le modèle d'occurrence des événements qui sont survenus dans chaque dispositif terminal, et dérive la chaîne de degrés de progression d'événements survenus, laquelle correspond à la chaîne de caractères ;
dans lequel l'unité de calcul de degré de similarité calcule, pour chaque dispositif terminal, le degré de similarité entre la chaîne de degrés de progression d'événements survenus obtenue par l'unité de dérivation de chaîne de degrés de progression d'événements survenus et chacune de la pluralité des chaînes de degrés de progression d'événements d'attaque indiquées dans la table de chaîne de degrés de progression d'événements d'attaque ; et
dans lequel l'unité de visualisation d'état d'attaque : sélectionne la chaîne de degrés de progression d'événements d'attaque utilisée pour calculer un degré de similarité maximal parmi la pluralité des degrés de similarité calculés pour un dispositif terminal spécifique ; et affiche des graphes indiquant une transition de degré de progression dans la chaîne de degrés de progression d'événements survenus du dispositif terminal spécifique et une transition de degré de progression dans la chaîne de degrés de progression d'événements d'attaque sélectionnée, et visualise l'état de progression de l'attaque sur le système d'information.

7. Appareil de traitement d'informations selon la revendication 1,
dans lequel l'unité de stockage de table de chaîne de degrés de progression d'événements d'attaque stocke la table de chaîne de degrés de progression d'événements d'attaque indiquant la chaîne de degrés de progression d'événements d'attaque pour une séquence d'attaque d'une attaque passée.

8. Appareil de traitement d'informations selon la revendication 1,
dans lequel l'unité de stockage de table de chaîne de degrés de progression d'événements d'attaque stocke la table de chaîne de degrés de progression d'événements d'attaque indiquant la chaîne de degrés de progression d'événements d'attaque pour une séquence d'attaque d'une attaque supposée.

9. Procédé de traitement d'informations devant être mis en œuvre par un ordinateur, lequel inclut :

une unité de stockage de table d'événements d'attaque qui stocke une table d'événements d'attaque indiquant, pour chaque événement parmi une pluralité d'événements occasionnés par une attaque sur un système d'information, un degré de progression de l'attaque à un moment où chaque événement se produit ;
une unité de stockage de table de chaîne de degrés de progression d'événements d'attaque qui stocke une table de chaîne de degrés de progression d'événements d'attaque indiquant une chaîne de caractères en tant qu'une chaîne de degrés de progression d'événements d'attaque, la chaîne de caractères étant obtenue en concaténant les degrés de progression d'événements correspondants selon un motif d'occurrence d'événements dans une séquence d'attaque ;

dans lequel le procédé de traitement d'informations comprend les étapes ci-dessous consistant à :

par le biais de l'ordinateur, concaténer les degrés de progression d'événements correspondants selon le modèle d'occurrence des événements qui se sont produits dans le système d'information, et dériver une chaîne de degrés de progression d'événements survenus qui correspond à une chaîne de caractères ;

par le biais de l'ordinateur, calculer un degré de similarité entre la chaîne de degrés de progression d'événements survenus dérivée et la chaîne de degrés de progression d'événements d'attaque indiquée dans la table de chaîne de degrés de progression d'événements d'attaque en utilisant une fonction pour calculer une distance de modification de Levenshtein ; et

par le biais de l'ordinateur, visualiser un état de progression de l'attaque sur le système d'information, sur la base de la chaîne de degrés de progression d'événements survenus dérivée et d'un résultat de calcul du degré de similarité.

10. Programme informatique comprenant des instructions qui, lorsqu'elles sont exécutées par un ordinateur, amènent l'ordinateur à fonctionner en tant que l'appareil de traitement d'informations selon la revendication 1.

# Fig. 1

THREAT VISUALIZATION SYSTEM (INFORMATION PROCESSING APPARATUS) 100

110

LOG SERVER 111

P C 112

AUTHENTICATION SERVER 113

FILE SERVER 114

MAIL SERVER 115

IDS/IPS 116

NETWORK PROXY 117

FIREWALL 118

INTERNET 119

# Fig. 2

_100_

## THREAT VISUALIZATION SYSTEM
## (INFORMATION PROCESSING APPARATUS)

_101_ | CPU

_102_ | RAM

_103_ | ROM

_104_ | HARD DISK

_109_

_105_ | DISPLAYING DISPLAY

_106_ | KEYBOARD

_107_ | MOUSE

_108_ | COMMUNICATION BOARD

# Fig. 3

104

## HARD DISK

201

### ATTACK EVENT TABLE

202

### PAST CASE TABLE (ATTACK EVENT PROGRESS DEGREE STRING TABLE)

203

### ATTACK SCENARIO TABLE (ATTACK EVENT PROGRESS DEGREE STRING TABLE)

204

### THREAT VISUALIZATION PROGRAM

# Fig.4

102

## RAM

301

### ATTACK PHASE TABLE

# Fig. 5

100

## THREAT VISUALIZATION SYSTEM
## (INFORMATION PROCESSING APPARATUS)

| |
|---|
| TABLE STORAGE UNIT<br>(ATTACK EVENT TABLE STORAGE UNIT)<br>(ATTACK EVENT PROGRESS DEGREE<br>STRING TABLE STORAGE UNIT) |

1001

| |
|---|
| PHASE STRING GENERATION UNIT<br>(OCCURRED EVENT PROGRESS DEGREE<br>STRING DERIVATION UNIT) |

1002

| |
|---|
| SIMILARITY DEGREE CALCULATION UNIT |

1003

| |
|---|
| ATTACK STATUS VISUALIZATION UNIT |

1004

| |
|---|
| INPUT UNIT |

1005

| |
|---|
| OUTPUT UNIT |

1006

| |
|---|
| COMMUNICATION UNIT |

1007

# Fig. 6

## ATTACK EVENT TABLE

| DEVICE TYPE | EVENT ID | EVENT DESCRIPTION | PHASE |
|---|---|---|---|
| P C | 1001 | READ FROM USB | 1 |
| P C | 1002 | ADDITION OF SERVICE | 1 |
| P C | 1003 | CHANGE IN REGISTRY | 1 |
| P C | 1004 | PRIVILEGED OPERATION (USER ADDITION/DELETION/RIGHT CHANGE) | 3 |
| P C | 1005 | DELETION OF exe FILE | 4 |
| P C | 1006 | DELATION OF LOG FILE | 4 |
| AUTHENTICATION SERVER | 2001 | SUCCESS/FAILURE IN AUTEHNTICATION FOR MANAGER | 3 |
| AUTHENTICATION SERVER | 2002 | AUTHENTICATION FOR DIFFENRENT USER | 3 |
| AUTHENTICATION SERVER | 2003 | PRIVILEGED OPERATION (USER ADDITION/DELETION/RIGHT CHANGE) | 3 |
| FILE SERVER | 3001 | FOLDER ACCESS VIOLATION | 2 |
| MAIL SERVER | 4001 | RECEPTION OF ATTACHED FILE FROM FREE MAIL | 1 |
| IDS／IPS | 5001 | HOST SWEEP/PORT SCAN | 2 |
| IDS／IPS | 5002 | EXECUTION OF REMOTE COMMAND BETWEEN PCS | 2 |
| PROXY | 6001 | COMMUNICATION TO SITE IN BLACK LIST | 1 |
| PROXY | 6002 | SSL COMMUNICATION USING CERTIFICATE FOR WHICH VERIFICATION DOEST NOT SUCCEED | 2 |
| PROXY | 6003 | REGULAR COMMUNICATION TO DESTINATION OTHER THAN SITE IN WHITE LIST | 2 |
| PROXY | 6004 | CONNECT COMMUNICATION TO DESTINATION OTHER THAN SITE IN WHITE LIST | 2 |
| PROXY | 6005 | PROVIDE POST OF CERTAIN SIZE OR MORE TO DESTINATION OTHER THAN SITE IN WHITE LIST | 4 |

401  402  403  404

# Fig. 7

## PAST CASE TABLE

| PAST CASE ID (501) | EVENT ID STRING (502) | PHASE STRING (503) |
|---|---|---|
| 0001 | 1001, 1002, 1003, 6002, 3001, 2001, 6005 | 1112234 |
| 0002 | 4001, 1003, 6001, 6003, 5001, 2002, 6005 | 1112234 |
| 0003 | 1003, 6002, 2001, 6005, 1006 | 12344 |
| ... | ... | ... |

# Fig.8

## ATTACK SCENARIO TABLE

| SCENARIO ID (601) | EVENT ID STRING (602) | PHASE STRING (603) |
|---|---|---|
| 0001 | 1001, 1003, 6001, 6002, 2002, 6002 | 111234 |
| 0002 | 4001, 1003, 5001, 6002, 2002, 1004, 1005 | 1122344 |
| 0003 | 4001, 1002, 6002, 2001, 6003, 1005 | 112344 |
| ... | ... | ... |

Fig. 9

ATTACK PHASE TABLE

| DEVICE ID | PHASE STRING | MAXIMUM PHASE | UPDATE DATE AND TIME | PAST CASE ID | CASE SIMILARITY DEGREE | SCENARIO ID | SCENARIO SIMILARITY DEGREE |
|---|---|---|---|---|---|---|---|
| | 702 | 703 | 704 | 705 | 706 | 707 | 708 |
| 701 | | | | | | | |
| ID1 | 112123 | 3 | 2012/06/29 13:20:59 | 0001 | 0.57 | 0001 | 0.66 |
| ID2 | 1122 | 2 | 2012/06/28 21:38:40 | 0001 | 0.57 | 0003 | 0.5 |
| ID3 | 0 | 0 | — | — | 0 | — | 0 |
| ... | ... | ... | ... | ... | ... | ... | ... |
| IDn | | | | | | | |

DISPLAY OF SECURITY THREAT DISTRIBUTIONS

801

802    803    TOTAL    806

PHASE 4 :                    4

804  △SIMILARITY WITH PAST CASE          ☑
805  □SIMILARITY WITH ATTACK SCENARIO    ☑

PHASE 3 :                   69

△SIMILARITY WITH PAST CASE          ☑
□SIMILARITY WITH ATTACK SCENARIO    □

807

PHASE 2 :               2, 153

△SIMILARITY WITH PAST CASE          ☑
□SIMILARITY WITH ATTACK SCENARIO    □

808

PHASE 1 :              10, 205

△SIMILARITY WITH PAST CASE          ☑
□SIMILARITY WITH ATTACK SCENARIO    □

0                                    1

SIMILARITY DEGREE

Fig. 10

EP 2 899 665 B1

24

EP 2 899 665 B1

Fig. 11

901

DISPLAY OF SECURITY THREAT GROWTH PROCESSES

902

PHASE 4

PHASE 3

PHASE 2

PHASE 1

i

903

SIMILARITY DEGREE   0.80

GROWING ATTACK  ━━━━━     PAST CASE ▪▪▪▪▪▪▪

# Fig. 12

START

S1001 — EXTRACT LOG AND GENERATE ATTACK PHASE STRING

S1002 — CALCULATE SIMILARITY DEGREE BETWEEN OCCURRED EVENT AND PAST CASE AND SIMILARITY DEGREE BETWEEN OCCURRED EVENT AND SCENARIO

S1003 — DISPLAY ATTACK GROWTH PROCESS

END

# Fig. 13

DETAILED PROCESS IN S1001

START

S2001

IS MAXIMUM PHASE WITH RESPECT TO PC112 ZERO

YES

NO

S2002

IS DIFFERENCE BETWEEN EVENT OCCURRENCE DATE AND TIME AND UPDATE DATE AND TIME $T_1$ OR MORE

NO

YES

S2003

INITIALIZE RECORD WITH RESPECT TO PC 112

S2004

IS CORRESPONDING EVENT PRESENT IN ATTACK EVENT TABLE

NO

YES

S2005

ADD PHASE TO PHASE STRING 702

S2006

IS PHASE LARGER THAN MAXIMUM PHASE 703

NO

YES

S2007

UPDATE MAXIMUM PHASE 703 BY PHASE

S2008

UPDATE UPDATE DATE AND TIME 704

END

# Fig.14

## DETAILED PROCESS IN S1002

START

S3001 — INITIALIZE VARIABLE A FOR PAST CASE ID = 0001 AND INITIALIZE SIMILARITY DEGREE B = 0

S3002 — CALCULATE SIMILARITY DEGREE S BETWEEN PHASE STRING 503 OF PAST CASE ID IN VARIABLE A AND PHASE STRING 702 OF PC 112

S3003 — S>B — NO

YES

S3004 — UPDATE CASE SIMILARITY DEGREE 706 AND SIMILARITY DEGREE B BY S AND UPDATE PAST CASE ID 705 BY A

S3005 — LAST PAST CASE ID — YES

NO

S3006 — UPDATE VARIABLE A TO NEXT PAST CASE ID

S3007 — INITIALIZE VARIABLE C FOR SCENARIO ID = 0001 AND INITIALIZE VARIABLE E = 0

S3008 — CALCULATE SIMILARITY DEGREE S BETWEEN PHASE STRING 603 OF SCENARIO ID IN VARIABLE C AND PHASE STRING 702 OF PC 112

S3009 — S>E — NO

YES

S3010 — UPDATE SCENARIO 708 AND VARIABLE E BY S AND UPDATE SCENARIO ID 707 BY C

S3011 — LAST SCENARIO ID — YES

NO

S3012 — UPDATE VARIABLE C TO NEXT SCENARIO ID

END

# Fig.15

DETAILED PROCESS IN S1003

```
                    ( START )
                        |
S4001   SET VARIABLE F FOR DEVICE ID=0001
             AND INITIALIZE COUNTERS
             N1, N2, N3, AND N4 BY 0
                        |
YES                     v
S4002   < IS F LARGER THAN LAST DEVICE ID? >
                        |
                       NO
                        v
S4003      < MAXIMUM PAHSE 703 >
        1      2                    3      4    0
        v      v                    v      v
       (A)    (B)                  (C)    (D)

  (E) _____|
                        |
                        v
S4024   INCREMENT VARIABLE F BY ONE
                        |
                        v
S4025   DISPLAY COUNTERS N1 TO N4 ON
         TOTAL NUMBER DISPLAYS 803
         OF PHASES 1 TO 4
                        |
                     ( END )
```

# Fig. 16

```
        (A)                                    (B)
         │                                      │
         ▼                                      ▼
S4004 ◇ PAST CASE              S4009 ◇ PAST CASE
  NO  DISPLAY SELECTION BOX      NO  DISPLAY SELECTION BOX
      804 OF PHASE 1                 804 OF PHASE 2
         │ YES                          │ YES
         ▼                              ▼
S4005 ┌──────────────────┐   S4010 ┌──────────────────┐
      │ DRAW △ AT POSITION │        │ DRAW △ AT POSITION │
      │ CORRESPONDING TO CASE        │ CORRESPONDING TO CASE
      │ SIMILARITY DEGREE 706        │ SIMILARITY DEGREE
      │ IN REGION OF PHASE 1         │ 706 IN REGION OF PHASE 2
      └──────────────────┘        └──────────────────┘
         │                              │
         ▼                              ▼
S4006 ◇ ATTACK SCENARIO      S4011 ◇ ATTACK SCENARIO
  NO  DISPLAY SELECTION BOX      NO  DISPLAY SELECTION BOX
      805 OF PHASE 1                 805 OF PHASE 2
         │ YES                          │ YES
         ▼                              ▼
S4007 ┌──────────────────┐   S4012 ┌──────────────────┐
      │ DRAW □ AT POSITION │        │ DRAW □ AT POSITION │
      │ CORRESPONDING TO SCENARIO    │ CORRESPONDING TO SCENARIO
      │ SIMILARITY DEGREE 708        │ SIMILARITY DEGREE 708
      │ IN REGION OF PHASE 1         │ IN REGION OF PHASE 2
      └──────────────────┘        └──────────────────┘
S4008 ┌──────────────────┐   S4013 ┌──────────────────┐
      │ INCREMENT COUNTER N1 BY ONE │ │ INCREMENT COUNTER N2 BY ONE │
      └──────────────────┘        └──────────────────┘
         │                              │
         └──────────────┬───────────────┘
                        ▼
                       (E)
```

# Fig. 17

C                    D

S4014
NO ← PAST CASE DISPLAY SELECTION BOX 804 OF PHASE 3
YES

S4015
DRAW △ AT POSITION CORRESPONDING TO CASE SIMILARITY DEGREE 706 IN REGION OF PHASE 3

S4016
NO ← ATTACK SCENARIO DISPLAY SELECTION BOX 805 OF PHASE 3
YES

S4017
DRAW □ AT POSITION CORRESPONDING TO SCENARIO SIMILARITY DEGREE 708 IN REGION OF PHASE 3

S4018
INCREMENT COUNTER N3 BY ONE

S4019
NO ← PAST CASE DISPLAY SELECTION BOX 804 OF PHASE 4
YES

S4020
DRAW △ AT POSITION CORRESPONDING TO CASE SIMILARITY DEGREE 706 IN REGION OF PHASE 4

S4021
NO ← ATTACK SCENARIO DISPLAY SELECTION BOX 805 OF PHASE 4
YES

S4022
DRAW □ AT POSITION CORRESPONDING TO SCENARIO SIMILARITY DEGREE 708 IN REGION OF PHASE 4

S4023
INCREMENT COUNTER N4 BY ONE

E

# Fig. 18

```
                    ┌─────────────┐
                    │    START    │
                    └──────┬──────┘
                           │
S5001  ┌───────────────────▼───────────────────┐
       │ OBTAIN FROM ATTACK PHASE TABLE 301     │
       │ PHASE STRING 702 WITH                  │
       │ RESPECT TO SELECTED DEVICE ID          │
       └───────────────────┬───────────────────┘
                           │
S5002  ┌───────────────────▼───────────────────┐
       │ DISPLAY GRAPH IN GROWTH                │
       │ PROCESS DISPLAY REGION 902             │
       │ ACCORDING TO PHASE STRING 702          │
       └───────────────────┬───────────────────┘
                           │
                         S5003
                    ╱─────────────╲
                   ╱  IS SYMBOL    ╲          NO
           ◄──────╱ WITH RESPECT TO ╲─────────────────┐
                  ╲  PAST CASE      ╱                  │
                   ╲  SELECTED     ╱                   │
                    ╲─────────────╱                    │
                        │ YES                          │
```

| S5004 OBTAIN FROM ATTACK PHASE TABLE 301 PAST CASE ID 705 WITH RESPECT TO SELECTED DEVICE ID | S5008 OBTAIN FROM ATTACK PHASE TABLE 301 SCENARIO ID 707 WITH RESPECT TO SELECTED DEVICE ID |
|---|---|
| S5005 OBTAIN FROM PAST CASE TABLE 202 PHASE STRING 503 CORRESPONDING TO PAST CASE ID 705 | S5009 OBTAIN FROM SCENARIO TABLE 203 PHASE STRING 603 CORRESPONDING TO SCENARIO ID 707 |
| S5006 DISPLAY GRAPH IN GROWTH PROCESS DISPLAY REGION 902 ACCORDING TO PHASE STRING 503 | S5010 DISPLAY GRAPH IN GROWTH PROCESS DISPLAY REGION 902 ACCORDING TO PHASE STRING 603 |
| S5007 DISPLAY CASE SIMILARITY DEGREE 706 ON SIMILARITY DEGREE DISPLAY 903 | S5011 DISPLAY SCENARIO SIMILARITY DEGREE 708 ON SIMILARITY DEGREE DISPLAY 903 |

```
                    ┌─────────────┐
                    │     END     │
                    └─────────────┘
```

**EP 2 899 665 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2005091513 A1
- EP 0985995 A1
- US 2004201612 A1
- US 6681331 B1
- US 2012102542 A1
- JP 2004537075 A